(19) **Europäisches Patentamt / European Patent Office / Office européen des brevets**

(11) **EP 3 343 830 B1**

(12) **EUROPEAN PATENT SPECIFICATION**

(45) Date of publication and mention of the grant of the patent:
**17.07.2019 Bulletin 2019/29**

(21) Application number: **15905836.1**

(22) Date of filing: **08.10.2015**

(51) Int Cl.:
*H04L 9/00* (2006.01)     *H04L 9/08* (2006.01)
*H04L 9/30* (2006.01)     *H04L 9/32* (2006.01)

(86) International application number:
**PCT/JP2015/078678**

(87) International publication number:
**WO 2017/061017 (13.04.2017 Gazette 2017/15)**

(54) **ENCRYPTION SYSTEM, HOMOMORPHIC SIGNATURE METHOD, AND HOMOMORPHIC SIGNATURE PROGRAM**

VERSCHLÜSSELUNGSSYSTEM, HOMOMORPHES SIGNATURVERFAHREN UND HOMOMORPHES SIGNATURPROGRAMM

SYSTÈME DE CHIFFREMENT, PROCÉDÉ DE SIGNATURE HOMOMORPHE ET PROGRAMME DE SIGNATURE HOMOMORPHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.07.2018 Bulletin 2018/27**

(73) Proprietor: **Mitsubishi Electric Corporation Chiyoda-ku Tokyo 100-8310 (JP)**

(72) Inventors:
- **KOSEKI, Yoshihiro Tokyo 100-8310 (JP)**
- **KAWAI, Yutaka Tokyo 100-8310 (JP)**

(74) Representative: **Mewburn Ellis LLP City Tower 40 Basinghall Street London EC2V 5DE (GB)**

(56) References cited:
**US-A- 5 465 299     US-A- 5 465 299**

- **AHN JAE HYUN ET AL: "Computing on Authenticated Data", JOURNAL OF CRYPTOLOGY, SPRINGER, NEW YORK, NY, US, vol. 28, no. 2, 18 April 2014 (2014-04-18), pages 351-395, XP035455273, ISSN: 0933-2790, DOI: 10.1007/S00145-014-9182-0 [retrieved on 2014-04-18]**
- **KAWAI YUTAKA ET AL: "Predicate- and Attribute-Hiding Inner Product Encryption in a Public Key Setting", 22 November 2013 (2013-11-22), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047266266, ISSN: 0302-9743 ISBN: 978-3-642-16065-3 * abstract * * Sections 2 and 3. ***
- **JAE HYUN AHN ET AL.: 'Computing on Authenticated Data' CRYPTOLOGY EPRINT ARCHIVE: REPORT 2011/096, [Online] 26 December 2011, pages 1 - 35, XP035455273 Retrieved from the Internet: <URL:https://eprint. iacr.org/2011/096.pdf> [retrieved on 2015-12-02]**

**EP 3 343 830 B1**

(Cont. next page)

- **YUTAKA KAWAI ET AL.:** 'Predicate- and Attribute-Hiding Inner Product Encryption in a Public Key Setting' CRYPTOLOGY EPRINT ARCHIVE: REPORT 2013/763, [Online] 21 November 2013, pages 1 - 47, XP047266266 Retrieved from the Internet: <URL:https://eprint.iacr. org/2013/763.pdf> [retrieved on 2015-12-02]
- **NORIAKI FURUKAWA ET AL.:** 'Standard Model de Full Secure na Tsuikagata Shomei' 2010 NEN SYMPOSIUM ON CRYPTOGRAPHY AND INFORMATION SECURITY SCIS2010 vol. 4A2-5, 22 January 2010, pages 1 - 6
- **YOSHIHIRO KOSEKI ET AL.:** 'Moji Ichi no Kokan o Kano to suru Kagitsuki Jundokei Shomei Hoshiki' COMPUTER SECURITY SYMPOSIUM 2015 (CSS2015 vol. 2C3-2, 14 October 2015, pages 592 - 599, XP009504826

## Description

Technical Field

The present invention relates to a cryptographic system, a homomorphic signature method, and a homomorphic signature program.

Background Art

Electronic signatures are a technique whereby, by generation of a signature for a message by a signatory, using a secret key and by verification of a set of the signature and the message by a verifier, using a verification key, it is guaranteed that falsification of the message is not performed. In a usual electronic signature, when a signature is generated for a message and even a minute alteration is applied to the message, the message is not verified to be a proper message in order to detect any falsification of the message. Accordingly, no editing can be performed for the message for which the signature has been generated.

On the other hand, homomorphic signatures refer to a scheme where a message for which a signature has been generated can be altered within a certain range, or a signature for the message that has been altered can be generated from the signature of the original message. Various homomorphic signature schemes have been proposed, according to types of the alterations that can be made for the message. Patent Literature 1 and Non-Patent Literature 1, for example, describe about a scheme in which, when a message is regarded as a vector, the message can be altered to a linear sum of a plurality of vectors, using signatures of the vectors. Non-Patent Literature 2 describes a scheme in which, when a message is regarded as a set, the message can be altered to its subset, or when the message is regarded as a character string, the message can be altered to its partial character string. US 5 465 299 proposes an electronic document processing system and method of forming a digital signature. Ahn Jae Hyun et al: "Computing on Authenticated Data", Journal of Cryptology, Springer, New York, NY, US, Vol. 28, No. 2, 18 April 2018 proposes a framework for computing on authenticate data via the notion of slightly homomorphic signatures. Kawai Yutaka et al: "Predicate- and Attribute-Hiding Inner Product Encryption in a Public Key Setting", 22 November 2013, Medical Image Computing and Computer-assisted intervention - MICCAI 2015: 18th International Conference, Munich, Germany, October 5-9, 2015; Proceedings; [Lecture notes in computer science; Lect. Notes computer], Springer International Publishing, CH, proposes a definition of predicate hiding inner product encryption, termed inner product encryption with ciphertext conversion, where original ciphertexts are converted to predicate-searchable ones by a helper in possession of a conversion key.

Citation List

Patent Literature

Patent Literature 1: JP 2014-158265 A

Non-Patent Literature

Non-Patent Literature 1: B. LIBERT, M. JOYE, M. YUNG "Linearly homomorphic structure-preserving signatures and their applications" Advances in Cryptology-CRYPTO 2013, LNCS 8043, pp. 289-307, 2013
Non-Patent Literature 2: N. ATTRAPADUNG, B. LIBERT, T. PETERS "Computing on Authenticated Data: New Privacy Definitions and Constructions" Advances in Cryptology-ASIACRYPT 2012, LNCS 7658, pp. 367-385, 2012

Summary of Invention

Technical Problem

In the homomorphic signatures, an increase in the types of the alterations that can be made for the message is necessary in order to create various applications. For any of conventional homomorphic signatures, no scheme is present which implements character position interchange in a character string, as an alteration type. This is because, in mathematical structures and the alteration methods used in the conventional schemes, it has been difficult to implement the character position interchange in the character string while maintaining signature security. That is, there is a problem that in the conventional homomorphic signatures, the character position interchange in the character string cannot be implemented as the alteration type.

An object of the present invention is to implement a homomorphic signature scheme capable of securely implement character position interchange in a character string while maintaining signature security by using a mathematical structure different from mathematical structures used in conventional schemes.

Solution to Problem

The invention provides a cryptographic system as set out in claim 1, a homomorphic signature method as set out in claim 6, and a homomorphic signature program as set out in claim 7.

Advantageous Effects of Invention

According to the cryptographic system of the present invention, the second signature for the altered message, in which the two characters at the different positions in the message are interchanged, can be generated, using the signature and the homomorphic key. Thus, an effect can be achieved that a homomorphic signature scheme which implements the character position interchange of the characters while maintaining signature security can be provided.

Brief Description of Drawings

Fig. 1 is a system configuration diagram of a cryptographic system 100 according to a first embodiment.

Fig. 2 is a diagram illustrating a configuration of a key generation apparatus 101 according to the first embodiment.

Fig. 3 is a diagram illustrating a configuration of a signature generation apparatus 102 according to the first embodiment.

Fig. 4 is a diagram illustrating a configuration of a homomorphic operation apparatus 103 according to the first embodiment.

Fig. 5 is a diagram illustrating a configuration of a signature verification apparatus 104 according to the first embodiment.

Fig. 6 is a flow diagram illustrating each of a homomorphic signature process S100 and a homomorphic signature method 500 in the cryptographic system 100 according to the first embodiment.

Fig. 7 is a flow diagram illustrating a process flow of a key generation process S101 according to the first embodiment.

Fig. 8 is a flow diagram of a key generation algorithm execution process (step S112) that is the execution process of a key generation algorithm according to the first embodiment.

Fig. 9 is a flow diagram of the key generation algorithm execution process (step S112) that is the execution process of the key generation algorithm according to the first embodiment.

Fig. 10 is a flow diagram illustrating a process flow of a signature generation process S102 according to the first embodiment.

Fig. 11 is a flow diagram of a signature generation algorithm execution process (step S122) that is the execution process of a signature generation algorithm according to the first embodiment.

Fig. 12 is a flow diagram illustrating a process flow of a homomorphic operation process S103 according to the first embodiment.

Fig. 13 is a flow diagram of a homomorphic operation algorithm execution process (step S132) that is the execution process of a homomorphic operation algorithm according to the first embodiment.

Fig. 14 is a flow diagram illustrating a process flow of a signature verification process S104 according to the first embodiment.

Fig. 15 is a flow diagram of a signature verification algorithm execution process (step S142) that is the execution process of a signature verification algorithm according to the first embodiment.

Fig. 16 is a diagram illustrating a configuration of the key generation apparatus 101 according to a variation example of the first embodiment.

Fig. 17 is a diagram illustrating a configuration of the signature generation apparatus 102 according to the variation example of the first embodiment.

Fig. 18 is a diagram illustrating a configuration of the homomorphic operation apparatus 103 according to the variation example of the first embodiment.

Fig. 19 is a diagram illustrating a configuration of the signature verification apparatus 104 according to the variation example of the first embodiment.

Description of Embodiments

First, the notations in a description of an embodiment will be explained below.

(1) y←A indicates that when A is a random variable or distribution, y is uniformly and randomly selected from A according to the distribution of A, or that y is a uniform random number on A.
(2) y: = z indicates that y is a set defined by z, or that z is substituted into a variable y.
(3) $F_q$ indicates a finite field with an order q.
(4) Formula 1 described below indicates a vector representation in the finite field $F_q$.

[Formula 1]

$$\left( x_1, ..., x_n \right) \in F_q^n$$

(5) $X^T$ indicates a transposed matrix of a matrix X.
(6) B: = $(b_1, ..., b_N)$ and B*: = $(b_1^*, ..., b_N^*)$ respectively indicate a basis B constituted from vectors $b_1, ..., b_N$ and a basis B* constituted from vectors $b_1^*, ..., b_N^*$.
(7) Formula 2 described below indicates notations using original coefficient vectors on the bases B and B*.

[Formula 2]

$$\left(x_1, \ldots, x_N\right)_B := \sum_{i=1}^{N} x_i b_i$$

$$\left(y_1, \ldots, y_N\right)_{B^*} := \sum_{i=1}^{N} y_i b_i^*$$

(8) Formula 3 described below indicates an N-dimensional vector space V over the finite field $F_q$.

[Formula 3]

$$V := \overbrace{G \times \cdots \times G}^{N}$$

(9) Formula 4 described below indicates $a_i$ of a canonical base A: = $(a_1, \ldots, a_N)$ of the space V.

[Formula 4]

$$a_i := (\overbrace{0, \ldots, 0}^{i-1}, g, \overbrace{0, \ldots, 0}^{N-i})$$

(10) Formula 5 described below indicates a definition of pairing on the space V.

[Formula 5]

$$e(x, y) := \prod_{i=1}^{N} e(G_i, H_i) \in G_T$$

$$\begin{pmatrix} x := (G_1, \ldots, G_N) \in V \\ y := (H_1, \ldots, H_N) \in V \end{pmatrix}$$

Subsequently, a mathematical concept in the description of the embodiment will be described below.
First, symmetric bilinear pairing groups will be described.

The symmetric bilinear pairing groups (q, G, $G_T$, g, e) are a tuple of a prime q, a cyclic additive group G of an order q to which the prime q is set, a cyclic multiplicative group $G_T$ of the order q, $g \neq 0 \in G$, and a polynomial-time computable nondegenerate bilinear pairing e: G × G→$G_T$. The nondegenerate bilinear pairing signifies e(sg, tg) = e(g, g)$^{st}$ where e(g, g) $\neq$ 1.
Dual pairing vector spaces will now be described.
The dual pairing vector spaces (q, V, $G_T$, A, e) can be configured by a direct product of the symmetric bilinear pairing groups (q, G, $G_T$, g, e). The dual pairing vector spaces (q, V, $G_T$, A, e) are a tuple of the prime q, the N-dimensional vector space V over the $F_q$ indicated in Formula 3, the cyclic multiplicative group $G_T$ of the order q, the canonical basis A:=$(a_1, \ldots, a_N)$ of the space V, and the pairing e. $a_i$ is as indicated by Formula 4.
The pairing on the space V is defined by Formula 5. This pairing is a nondegenerate bilinear type. That is, e (sx, ty) = e (x, y)$^{st}$. If e (x, y) = 1 for all y $\in$ V, x = 0. Further, for all i and j, e ($a_i$, $a_j$) = e (g, g)$^{\delta i, j}$. if i = j, $\delta_{i,j}$ =1 is obtained. If i $\neq$ j, $\delta_{i,j}$ = 0. Further, e (g, g) $\neq$ 1 $\in G_T$.
In this embodiment, a description will be directed to a case where dual pairing vector spaces are constructed from the symmetric bilinear pairing groups mentioned above. Dual pairing vector spaces can be constructed from asymmetric bilinear pairing groups as well. The following description can be applied to a case where the dual pairing vector spaces are constructed from the asymmetric bilinear pairing groups.

First Embodiment.

*** Description of Configuration ***

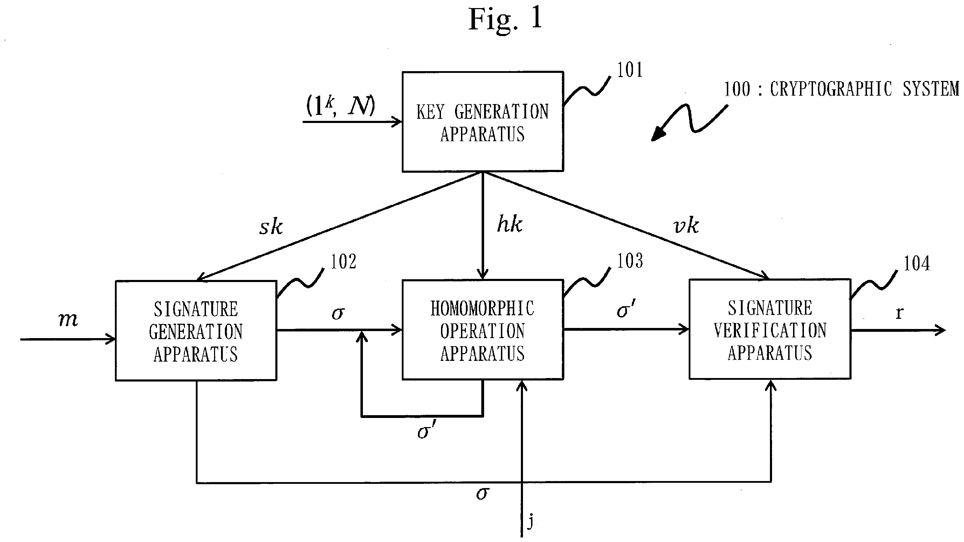

Fig. 1 is a system configuration diagram of a cryptographic system 100 according to this embodiment.
As illustrated in Fig. 1, the cryptographic system 100 includes a key generation apparatus 101, a signature generation apparatus 102, a homomorphic operation apparatus 103, and a signature verification apparatus 104.
First, functions of the respective apparatuses in the cryptographic system 100 will be outlined, using Fig. 1.
The key generation apparatus 101 obtains a key generation parameter (1$^k$, N) and executes a key generation algorithm, thereby generating a verification key vk, a signature key sk, and a homomorphic key hk.
Herein, in order to maintain security of the scheme in the cryptographic system 100, the signature key sk is given to only a user or an apparatus permitted to execute signature generation. The homomorphic key hk is given to only a user or an apparatus permitted to execute a homomorphic operation. The signature key sk and the homomorphic key hk are each a secret key that is concealed to a user or an apparatus that is not permitted, other than the above-mentioned users or apparatuses. The verification key vk is a public key.

The signature generation apparatus 102 obtains the signature key sk from the key generation apparatus 101, and obtains a message m through an input device. The signature generation apparatus 102 executes a signature generation algorithm based on the signature key sk and the message m that have been obtained, and outputs a first signature $\sigma$.

The homomorphic operation apparatus 103 obtains the homomorphic key hk from the key generation apparatus 101, obtains the first signature $\sigma$ from the signature generation apparatus 102, and obtains a parameter j through an input device. The homomorphic operation apparatus 103 executes a homomorphic operation algorithm based on the homomorphic key hk, the first signature $\sigma$, and the parameter j that have been obtained, and outputs a second signature $\sigma'$. The second signature $\sigma'$ is a signature after the execution of the homomorphic operation algorithm, and is also referred to as an after-operation signature.

The signature verification apparatus 104 obtains the verification key vk from the key generation apparatus 101 and obtains a verification signature $v\sigma$, executes a signature verification algorithm, and outputs a verification result r of the verification signature $v\sigma$. Herein, the verification signature $v\sigma$ is the first signature $\sigma$ or the second signature $\sigma'$.

<Configuration of Key Generation Apparatus 101>

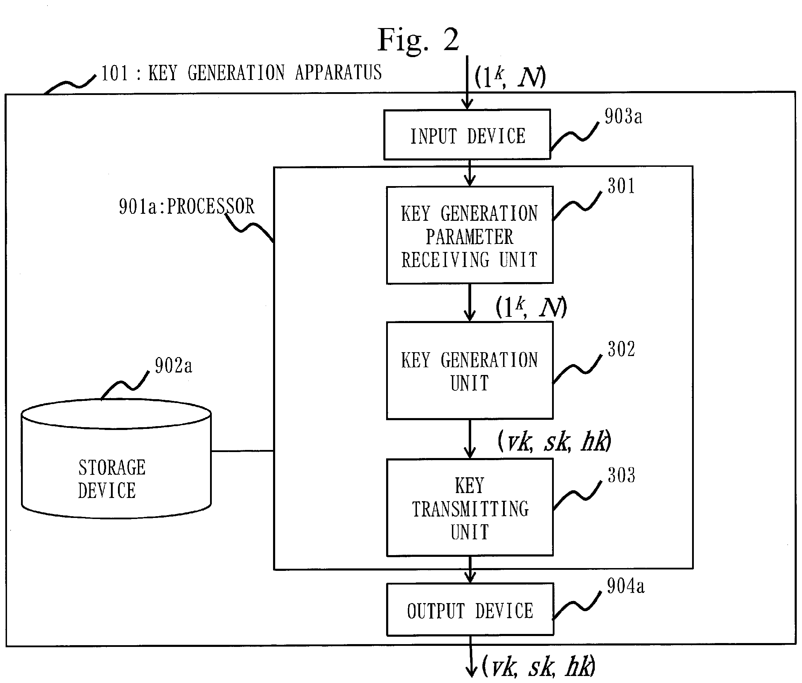

Fig. 2 is a diagram illustrating a configuration of the key generation apparatus 101 according to this embodiment.

The key generation apparatus 101 includes a key generation parameter receiving unit 301, a key generation unit 302, and a key transmitting unit 303.

The key generation apparatus 101 is a computer. Functions of the key generation parameter receiving unit 301, the key generation unit 302, and the key transmitting unit 303 in the key generation apparatus 101 are also referred to as functions of "units" of the key generation apparatus 101. A function of each "unit" of the key generation apparatus 101 is implemented by software. The key generation apparatus 101 includes hardware such as a processor 901a, a storage device 902a, an input device 903a, and an output device 904a.

<Configuration of Signature Generation Apparatus 102>

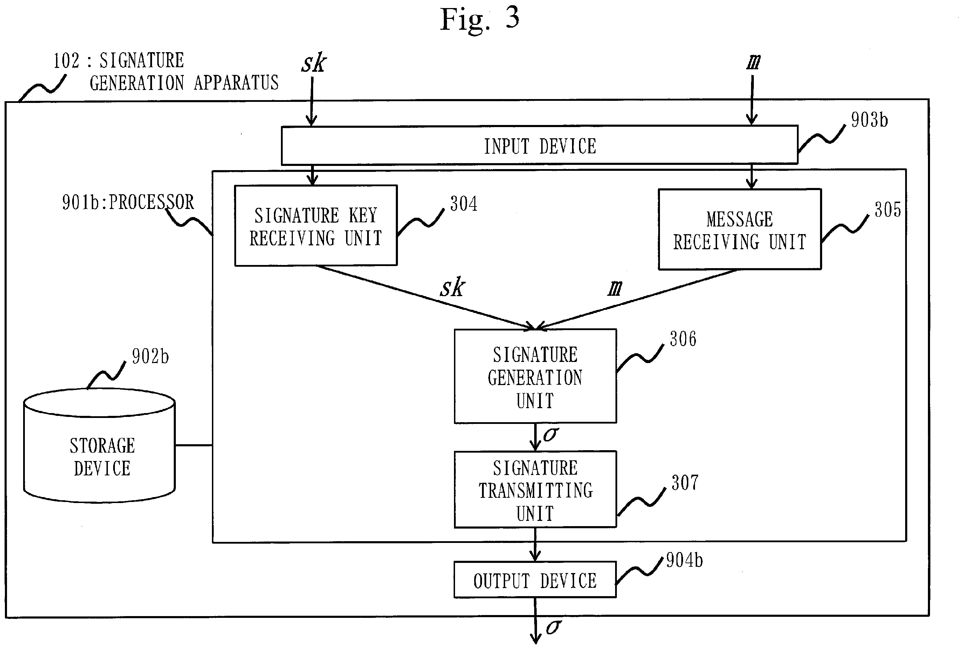

Fig. 3 is a diagram illustrating a configuration of the signature generation apparatus 102 according to this embodiment.

The signature generation apparatus 102 includes a signature key receiving unit 304, a message receiving unit 305, a signature generation unit 306, and a signature transmitting unit 307.

The signature generation apparatus 102 is a computer. Functions of the signature key receiving unit 304, the message receiving unit 305, the signature generation unit 306, and the signature transmitting unit 307 in the signature generation apparatus 102 are also referred to as functions of "units" of the signature generation apparatus 102. A function of each "unit" of the signature generation apparatus 102 is implemented by software. The signature generation apparatus 102 includes hardware such as a processor 901b, a storage device 902b, an input device 903b, and an output device 904b.

<Configuration of Homomorphic Operation Apparatus 103>

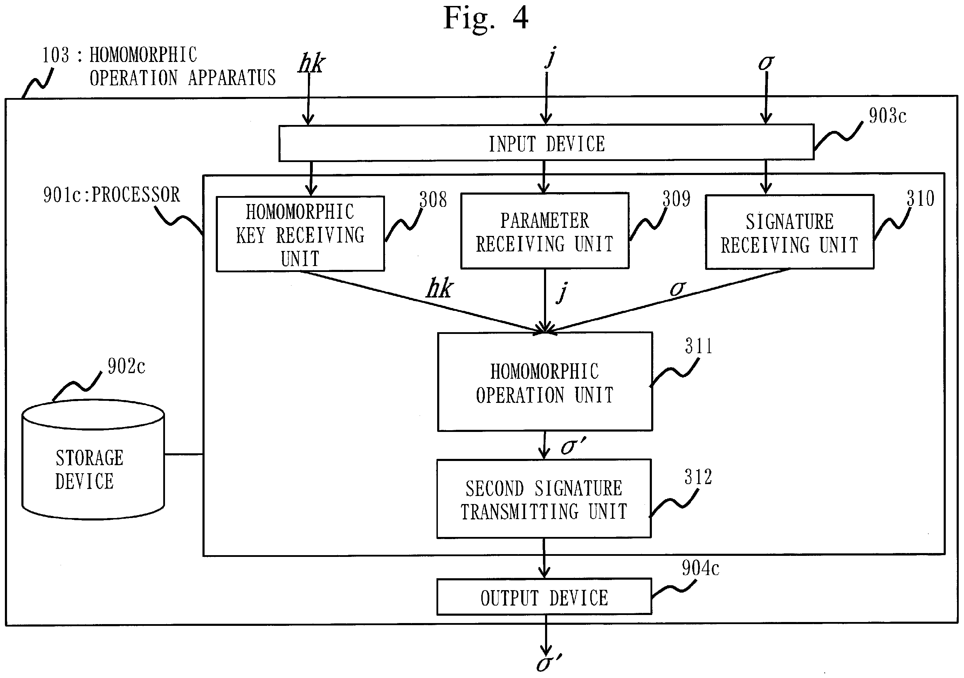

Fig. 4 is a diagram illustrating a configuration of the homomorphic operation apparatus 103 according to this embodiment.

The homomorphic operation apparatus 103 includes a homomorphic key receiving unit 308, a parameter receiving unit 309, a signature receiving unit 310, a homomorphic operation unit 311, and a second signature transmitting unit 312.

The homomorphic operation apparatus 103 is a computer. Functions of the homomorphic key receiving unit 308, the parameter receiving unit 309, the signature receiving unit 310, the homomorphic operation unit 311, and the second signature transmitting unit 312 in the homomorphic operation apparatus 103 are also referred to as functions of "units" of the homomorphic operation apparatus 103. A function of each "unit" of the homomorphic operation apparatus 103 is implemented by software. The homomorphic operation apparatus 103 includes hardware such as a processor 901c, a storage device 902c, an input device 903c, and an output device 904c.

<Configuration of Signature Verification Apparatus 104>

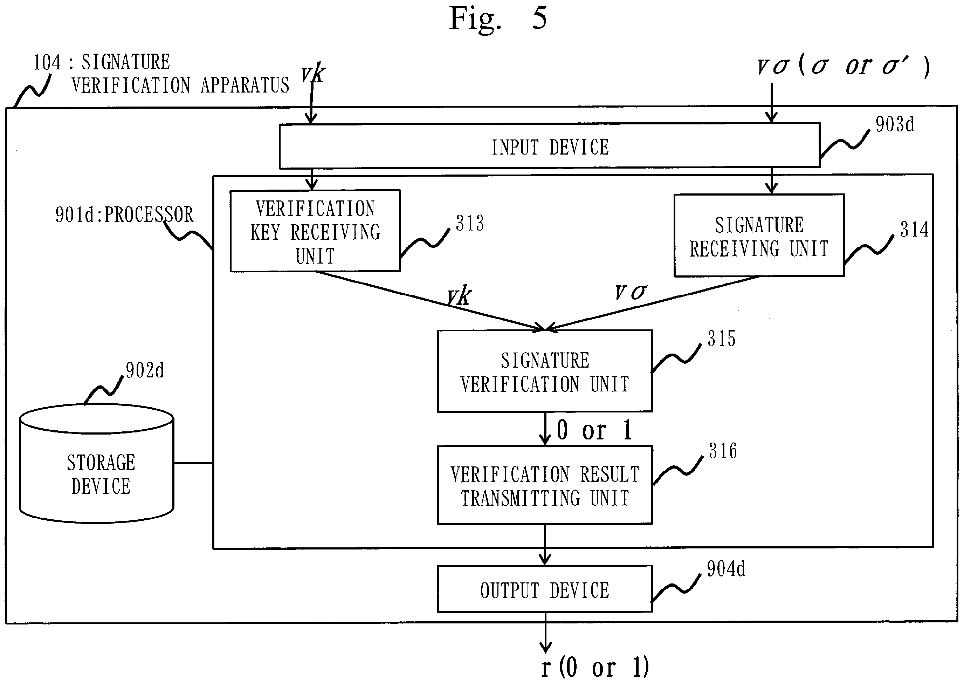

Fig. 5 is a diagram illustrating a configuration of the signature verification apparatus 104 according to this embodiment.

The signature verification apparatus 104 includes a verification key receiving unit 313, a signature receiving unit 314, a signature verification unit 315, and a verification result transmitting unit 316.

The signature verification apparatus 104 is a computer. Functions of the verification key receiving unit 313, the signature receiving unit 314, the signature verification unit 315, and the verification result transmitting unit 316 in the signature verification apparatus 104 are also referred to as functions of "units" of the signature verification apparatus 104. A function of each "unit" of the signature verification apparatus 104 is implemented by software. The signature verification apparatus 104 includes hardware such as a processor 901d, a storage device 902d, an input device 903d, and an output device 904d.

Now, the hardware of each apparatus included in the cryptographic system 100 will be described, using Figs. 2 to 5. In the following description, the processors 901a, 901b, 901c, and 901d will be collectively referred to as a processor 901. The same holds true for a storage device 902, an input device 903, and an output device 904. Each apparatus of the key generation apparatus 101, the signature generation apparatus 102, the homomorphic operation apparatus 103, and the signature verification apparatus 104 is also referred to as each apparatus of the cryptographic system 100.

Each apparatus of the cryptographic system 100 includes the hardware such as the processor 901, the storage device 902, the input device 903, and the output device 904. The processor 901 is connected to the other hardware via a signal line, and controls these other hardware.

The processor 901 is an IC (Integrated Circuit) to perform processing. Specifically, the processor 901 is a CPU (Central Processing Unit).

The storage device 902 includes an auxiliary storage device and a memory. Specifically, the auxiliary storage device is a ROM (Read Only Memory), a flash memory, or an HDD (Hard Disk Drive). Specifically, the memory is a RAM (Random Access Memory).

As a specific example of the input device 903, there is a mouse, a keyboard, or a touch panel.

As a specific example of the output device 904, there is a display. Specifically, the display is an LCD (Liquid Crystal Display).

Each apparatus of the cryptographic system 100 may include a communication device. The communication device includes a receiver to receive data and a transmitter to transmit data. Specifically, the communication device is a communication chip or an NIC (Network Interface Card). The communication device may be used as each of the input device 903 and the output device 904.

A program to implement the function of each "unit" is stored in the auxiliary storage device. This program is loaded into the memory, is read into the processor 901, and is executed by the processor 901. An OS (Operating System) is also stored in the auxiliary storage device. At least a part of the OS is loaded into the memory, and the processor 901 executes the program to implement the function of each "unit" while executing the OS.

Each apparatus of the cryptographic system 100 may include only one processor 901, or a plurality of the processors 901. The plurality of the processors 901 may cooperate and execute the program to implement the function of each "unit".

Information, data, signal values, and variable values indicating results of processes of the "units" are stored in the auxiliary storage device, the memory, or a register or a cache memory in the processor 901.

The program to implement the function of each "unit" may be stored in a portable storage medium such as a magnetic disk, a flexible disk, an optical disk, a compact disk, a blue ray (registered trade mark) disk, or a DVD (Digital Versatile Disc).

A homomorphic signature program 510 is a program to implement the function described as each "unit" of each apparatus in the cryptographic system 100. Further, what is referred to as a homomorphic program product is a storage medium or a storage device in which the program to implement the function described as each "unit" is stored, and is a product of any appearance in which a computer readable program is loaded.

*** Description of Operations ***

<Homomorphic Signature Process S100 and Homomorphic Signature Method 500 of Cryptographic System 100>

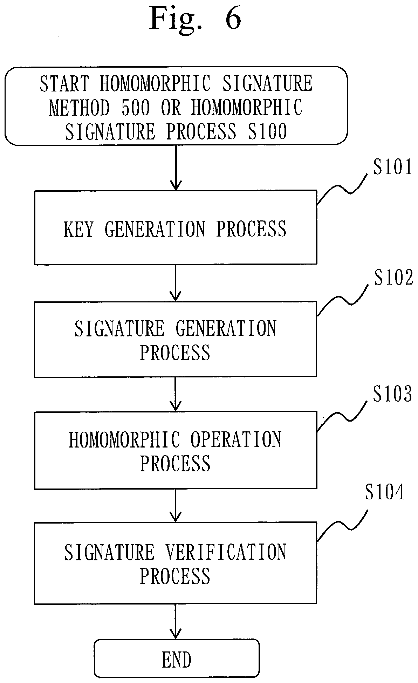

Fig. 6 is a flow diagram illustrating a flow of each of the homomorphic signature process S100 and the homomorphic signature method 500 of the cryptographic system 100 according to this embodiment.

In a key generation process S101, the key generation apparatus 101 obtains the key generation parameter ($1^k$, N), using the input device 903a, and generates the verification key vk, the signature key sk, and the homomorphic key hk.

In a signature generation process S102, the signature generation apparatus 102 obtains the signature key sk and the message m including N characters, using the input device 903b, and generates the first signature σ for the message m.

In a homomorphic operation process S103, the homomorphic operation apparatus 103 obtains the parameter j, the first signature σ, and the homomorphic key hk different from the signature key sk, using the input device 903c. Using the parameter j, the first signature σ, and the homomorphic key hk, the homomorphic operation apparatus 103 generates the second signature σ' for an altered message where a jth character and a j + 1th character of the message m are interchanged.

In a signature verification process S104, the signature verification apparatus 104 obtains the verification key vk and the verification signature vσ being the first signature σ or the second signature σ', using the input device 903d, verifies the verification signature vσ, and outputs the verification result r.

<Operations of Key Generation Apparatus 101>

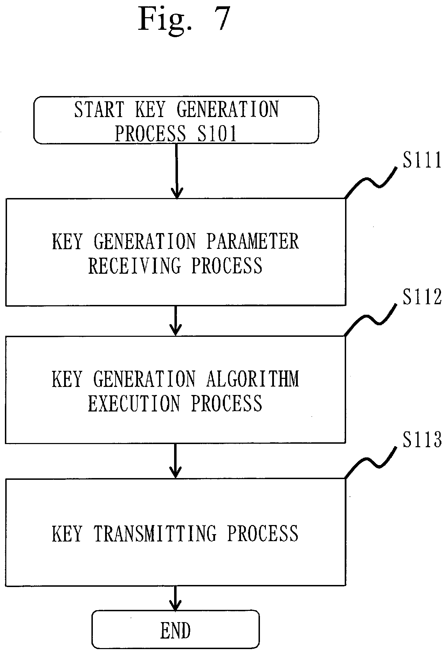

Fig. 7 is a flow diagram illustrating a process flow of the key generation process S101 according to this embodiment.

In step Sill, the key generation parameter receiving unit 301 receives the key generation parameter ($1^k$, N), using the input device 903a such as the keyboard or the communication device. k is a security parameter indicating strength of each key to be generated. The key generation parameter receiving unit 301 writes, into the storage device 902a, the key generation parameter ($1^k$, N) received. Step S111 is a key generation parameter receiving process.

In step S112, the key generation unit 302 executes the key generation algorithm, based on the key generation parameter ($1^k$, N) written into the storage device 902a. The key generation unit 302 executes the key generation algorithm, thereby generating the verification key vk, the signature key sk, and the homomorphic key hk. The key generation unit 302 writes, into the storage device 902a, the verification key vk, the signature key sk, and the homomorphic key hk that have been generated. Step S112 is a key generation algorithm execution process.

In step S113, the key transmitting unit 303 publicizes the verification key vk, transmits the signature key sk to the signature generation apparatus 102, and transmits the homomorphic key hk to the homomorphic operation apparatus 103, using the output device 904a such as the communication device. The key generation apparatus 101 transmits the signature key sk to the signature generation apparatus 102, using a secure communication path, and transmits the homomorphic key hk to the homomorphic operation apparatus 103, using a secure communication path. Step S113 is also referred to as a key transmitting process.

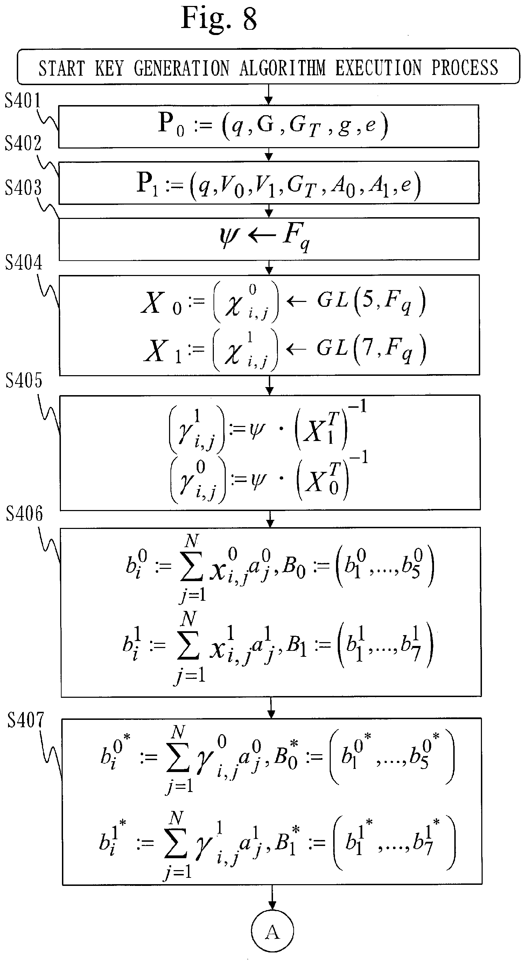

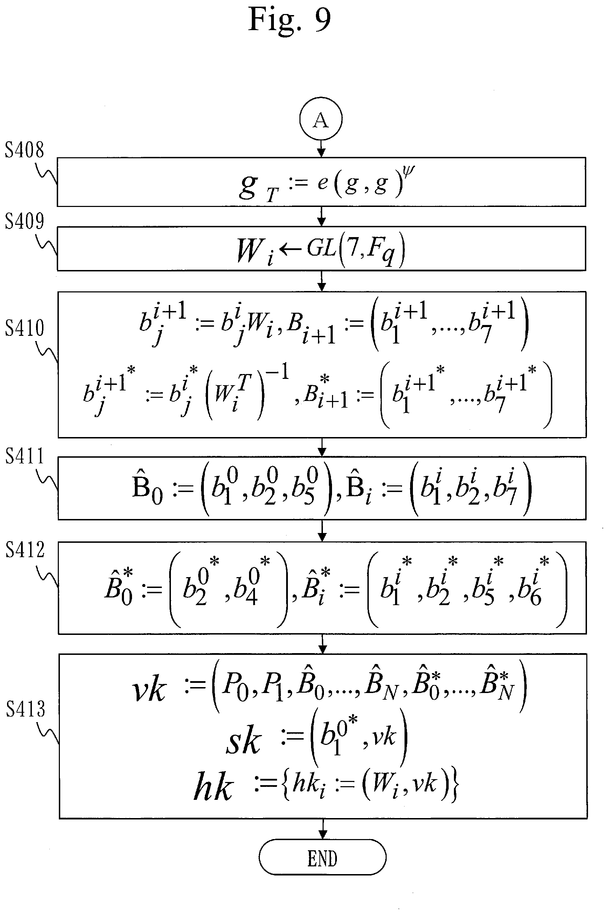

Each of Figs. 8 and 9 is a flow diagram of the key generation algorithm execution process (step S112) that is the execution process of the key generation algorithm according to this embodiment.

Herein, the key generation parameter ($1^k$, N) the key generation parameter receiving unit 301 has received is constituted from the security parameter k indicating the strength of each key to be generated and a natural number N indicating the character string length of the message for which the signature is to be generated.

In step S401, the key generation unit 302 determines an order q, a cyclic additive group G of the order q, a cyclic multiplicative group $G_T$ of the order q, a generator g of the cyclic additive group G, and a pairing e, as a parameter $P_0$ of symmetric bilinear pairing groups. The order q, the group G, the group $G_T$, and the generator g are herein generated by an existent algorithm to generate an elliptic curve such as a BN curve suitable for pairing. The pairing e is determined by selection of an existent pairing computation algorithm such as optimal ate pairing.

In step S402, the key generation unit 302 determines a parameter $P_1$ of dual pairing vector spaces, based on the parameter $P_0$ of the symmetric bilinear pairing groups. The parameter $P_1$ is a tuple of the order q, a five-dimensional vector space $V_0$, a seven-dimensional vector space $V_1$, the cyclic multiplicative group $G_T$ of the order q, a canonical basis $A_0$ of the $V_0$, a canonical basis $A_1$ of the $V_1$, and the pairing e. The key generation unit 302 determines the parameter $P_1$ as a pairing on a direct product of the symmetric bilinear pairing groups.

In step S403, the key generation unit 302 generates a random number $\psi$.

In step S404, the key generation unit 302 gen-

erates $X_0$ and $X_1$ that are random matrices on $F_q$ whose determinant is not 0. The $X_0$ has a size of $5 \times 5$, and the $X_1$ has a size of $7 \times 7$.

In step S405, the key generation unit 302 generates $(\gamma^0_{i,j}) := \psi \cdot (X_0^T)^{-1}$ and $(\gamma^1_{i,j}) := \psi \cdot (X_1^T)^{-1}$.

In step S406, the key generation unit 302 generates a basis $B_0$ from the canonical basis $A_0$ and generates a basis $B_1$ from the canonical $A_1$.

In step S407, the key generation unit 302 generates a basis $B_0^*$ from the canonical basis $A_0$ based on the $(\gamma^0_{i,j})$, and generates a basis $B_1^*$ from the canonical basis $A_1$ based on the $(\gamma^1_{i,j})$.

In step S404 to step S407, i is each of integers from 1 to 5 in the equations for obtaining the $X_0$, the basis $B_0$, and the basis $B_0^*$, and is each of integers from 1 to 7 in the equations for obtaining the $X_1$, the basis $B_1$, and the basis $B_1^*$.

In step S408, the key generation unit 302 generates $g_T := e(g, g)^\psi$.

In step S409, the key generation unit 302 generates a random matrix on the $F_q$ whose determinant is not 0 as N - 1 transformation matrices $W_1, ..., W_{N-1}$. Each size of the transformation matrices $W_1, ..., W_{N-1}$ is $7 \times 7$. In step S409, i in the $W_i$ is each of integers from 1 to N - 1.

In step S410, the key generation unit 302 generates bases $B_2, B_3, ..., B_N$ and bases $B_2^*, B_3^*, ..., B_N^*$, based on the basis $B_1$, the basis $B_1^*$, and the transformation matrices $W_1, ..., W_{N-1}$.

As mentioned above, the key generation unit 302 generates the bases $B_0, ..., B_N$ and bases $B_0^*, ..., B_N^*$ of the dual pairing vector spaces. In the bases $B_0, ..., B_N$, the bases after the $B_2$ are generated by using the (N - 1) transformation matrices $W_1, ..., W_{N-1}$. Further, in the bases $B_0^*, ..., B_N^*$, the bases after the $B_2^*$ are generated by using the (N - 1) transformation matrices $W_1, ..., W_{N-1}$.

In step S410, i is each of the integers from 1 to N - 1, and j is each of the integers from 1 to 7.

In step S411, the key generation unit 302 sets subbases $B_0^\wedge, ..., B_N^\wedge$ from the bases $B_0, ..., B_N$.

In step S412, the key generation unit 302 sets subbases $B_0^{\wedge*}, ..., B_N^{\wedge*}$ from the subbases $B_0^*, ..., B_N^*$.

In step S411 and step S412, i is each of integers from 1 to N.

In step S413, the key generation unit 302 generates the verification key vk including a subset of the bases $B_0, ..., B_N$ of the dual pairing vector spaces. Specifically, the key generation unit 302 generates the verification key vk including the parameter $P_0$ of the symmetric bilinear pairing groups, the parameter $P_1$ of the dual pairing vector spaces, a subset $B^\wedge$ of the respective bases $B_0, ..., B_N$ and a subset $B^{\wedge*}$ of the respective bases $B_0^*, ..., B_N^*$.

The key generation unit 302 further generates the signature key sk including the subset of the respective bases $B_0^*, ..., B_N^*$. Specifically, the key generation unit 302 generates the signature key sk including $b_1^{0*}$ and the verification key vk.

Further, the key generation unit 302 sets the homomorphic key hk = {$hk_1$, ..., $hk_{N-1}$} including the transformation matrices $W_1$, ..., $W_{N-1}$ and the subset of the respective bases $B_0^*$, ..., $B_N^*$. Specifically, the key generation unit 302 generates the homomorphic key hk = {$hk_1$, ..., $hk_{N-1}$} including the transformation matrices $W_1$, ..., $W_{N-1}$ and the verification key vk.

As mentioned above, the key generation unit 302 receives the key generation parameter constituted from the set of the security parameter k and the natural number N indicating the character string length of the message for which the signature is to be generated. The key generation unit 302 generates the parameter of the symmetric bilinear pairing groups, generates the parameter of the dual pairing vector spaces, generates the set of the random matrices, and generates the set of the bases of the dual pairing vector spaces from the set of the random matrices. Then, the key generation unit 302 makes the verification key vk constituted from the set of the random matrices, the subsets of the bases of the dual pairing vector spaces, the parameter of the symmetric bilinear pairing groups, and the parameter of the dual pairing vector spaces, the signature key sk constituted from the element of the bases of the dual pairing vector spaces and the verification key vk, and the homomorphic key hk constituted from the set of the random matrices and the verification key vk.

<Operations of Signature Generation Apparatus 102>

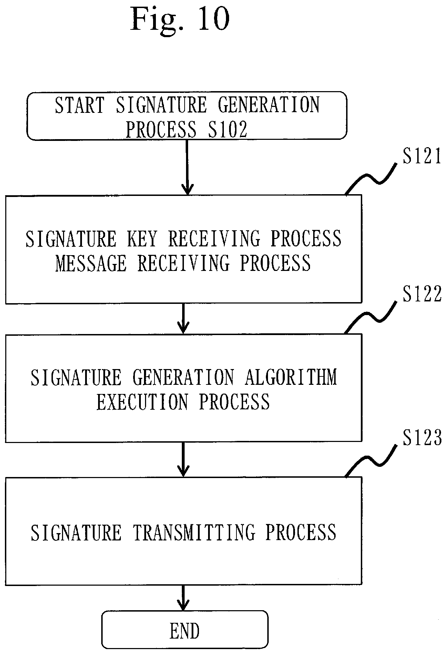

Fig. 10 is a flow diagram illustrating a process flow of the signature generation process S102 according to this embodiment.

In step S121, the signature key receiving unit 304 receives the signature key sk, using the input device 903b such as the communication device. The message receiving unit 305 receives the message m, using the input device 903b such as the keyboard or the communication device. The signature key sk and the message m are written into the storage device 902b. Step S121 is a signature key receiving process and a message receiving process.

In step S122, the signature generation unit 306 executes the signature generation algorithm based on the signature key sk and the message m written into the storage device 902b, thereby generating the first signature σ. The signature generation unit 306 writes, into the storage device 902b, the first signature σ generated. Step S122 is a signature generation algorithm execution process.

In step S123, the signature transmitting unit 307 transmits the first signature σ written into the storage device 902b to the homomorphic operation apparatus 103 or the signature verification apparatus 104, using the output device 904b such as the communication device. When the signature transmitting unit 307 transmits the first signature σ to the signature verification apparatus 104, the signature transmitting unit 307 transmits the first signature σ to the signature verification apparatus 104 as the verification signature vσ to be verified. Step S123 is a signature transmitting process.

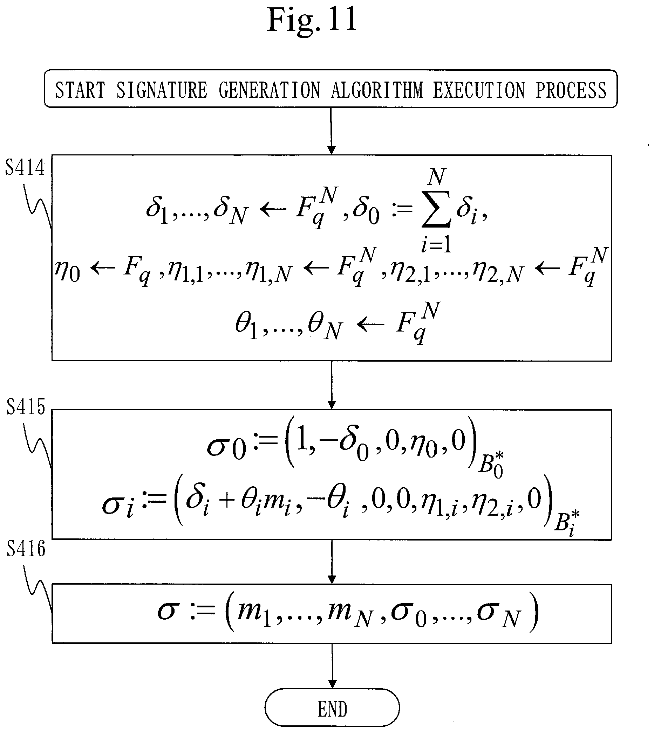

Fig. 11 is a flow diagram of the signature generation algorithm execution process (step S122) that is the execution process of the signature generation algorithm according to this embodiment.

Herein, the signature generation unit 306 inputs, to the signature generation algorithm execution process, the signature key sk the signature key receiving unit 304 has received and the message m the message receiving unit 305 has received. The message m is constituted from a vector with a length of N on the $F_q$.

In step S414, the signature generation unit 306 generates random numbers $\delta_0$, ..., $\delta_N$, a random number $\eta_0$, random numbers $\eta_{1,1}$, ..., $\eta_{1,N}$, random numbers $\eta_{2,1}$, ..., $\eta_{2,N}$, and random numbers $\theta_1$, ..., $\theta_N$.

In step S415, the signature generation unit 306 generates elements $\sigma_0$, ..., $\sigma_N$ on the dual pairing vector spaces, using the random numbers generated in step S414 and the bases $B_0^*$, ..., $B_N^*$. The signature generation unit 306 generates a set of the elements $\sigma_0$, $\sigma_1$, ..., $\sigma_N$ that are the elements on the dual pairing vector spaces and include each character $m_i$ contained in the message m ($m_1$, ..., $m_N$), using the subset of the the respective bases $B_0^*$, ..., $B_N^*$ included in the signature key sk and the message m.

In step S416, the signature generation unit 306 generates the first signature σ including the set of the elements $\sigma_0$, $\sigma_1$, ..., $\sigma_N$ generated. Herein, the signature generation unit 306 generates and outputs the first signature σ including the message constituted from the $m_1$, ..., $m_N$ and the set of the elements $\sigma_0$, $\sigma_1$, ..., $\sigma_N$ generated.

<Operations of Homomorphic Operation Apparatus 103>

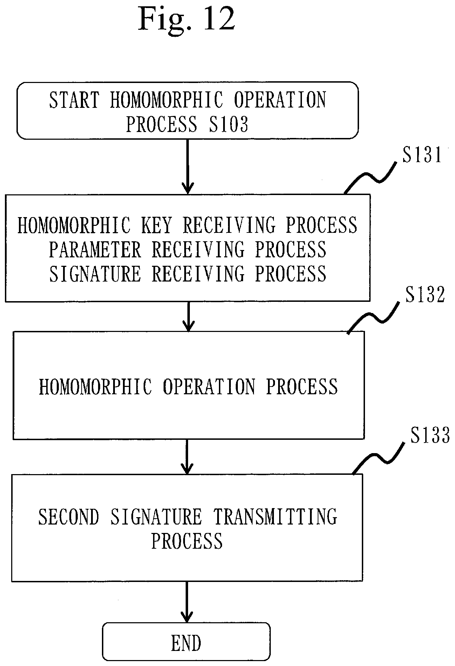

Fig. 12 is a flow diagram illustrating a process flow of the homomorphic operation process S103 according to this embodiment.

In the homomorphic operation process S103 by the homomorphic operation apparatus 103, the second signature σ' for the altered message where two characters at different positions in the message m are interchanged is generated, using the first signature σ and the homomorphic key hk different from the signature key sk.

In step S131, the homomorphic key receiving unit 308 receives the homomorphic key hk, using the input device 903c such as the communication device. The parameter receiving unit 309 receives the parameter j, using the input device 903c such as the keyboard or the communication device. The signature receiving unit 310 receives the first signature σ, using the input device 903c such as the communication device. The homomorphic key hk the homomorphic key receiving unit 308 has received, the parameter j the parameter receiving unit 309 has received, and the first signature σ the signature receiving unit 310 has received are written into the storage device 902c. Step S131 is a homomorphic key receiving process, a parameter receiving process, and a signature receiving process.

In step S132, the homomorphic operation unit 311 executes the homomorphic operation algorithm, based on the homomorphic key hk, the parameter j, and the first signature σ written into the storage device 902c. The homomorphic operation unit 311 executes the homomorphic operation algorithm, thereby generating the second signature σ'. The homomorphic operation unit 311 writes, into the storage device 902c, the second signature σ' generated. Step S132 is a homomorphic operation algorithm execution process.

In step S133, the second signature transmitting unit 312 transmits the second signature σ' written into the storage device 902c to the signature verification apparatus 104, using the output device 904c such as the communication device. In this case, the second signature transmitting unit 312 transmits the second signature σ' to the signature verification apparatus 104, as the verification signature vσ to be verified. Alternatively, when character positions in the message m are further interchanged, the second signature transmitting unit 312 transmits the second signature σ' to the homomorphic operation apparatus 103 including the second signature transmitting unit 312 again. Step S133 is a second signature transmitting process.

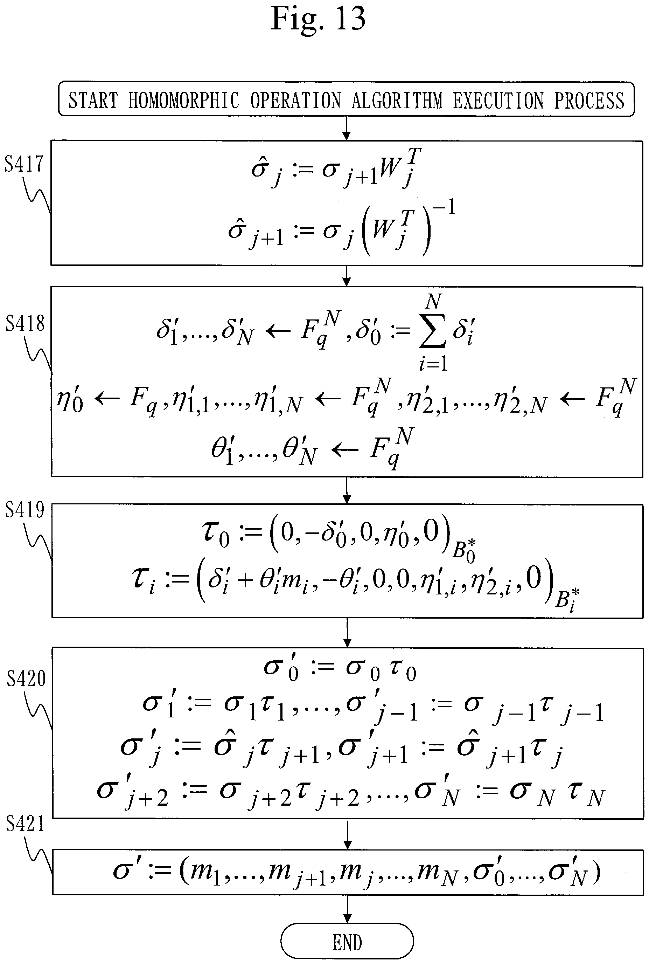

Fig. 13 is a flow diagram of the homomorphic operation algorithm execution process (step S132) that is the execution process of the homomorphic operation algorithm according to this embodiment.

Herein, the homomorphic operation unit 311 inputs, to the homomorphic operation algorithm execution process, the homomorphic key hk the homomorphic key receiving unit 308 has received, the parameter j the parameter receiving unit 309 has received, and the first signature σ the signature receiving unit 310 has received. The parameter j is an integer not less than one and not more than N - 1. The parameter j indicates that the jth $m_j$ and the j + 1th $m_{j+1}$ in the message m $(m_1, ..., m_N)$ become interchanged . That is, the parameter j is an integer indicating the position of the character to be interchanged with the position of the character located to the right by one character.

In step S417, the homomorphic operation unit 311 generates $\sigma_j^\wedge$ and $\sigma_{j+1}^\wedge$, using the elements $\sigma_j$ and $\sigma_{j+1}$ of the first signature σ and the $W_j$ included in the homomorphic key hk. The homomorphic operation unit 311 interchanges the jth $\sigma_j$ and the j + 1th $\sigma_{j+1}$ in the set of the elements $\sigma_1, ..., \sigma_N$ included in the first signature σ, using, among the transformation matrices $W_1, ..., W_{N-1}$ included in the homomorphic key hk, the jth transformation matrix $W_j$ where the jth is the value of the parameter j . The homomorphic operation unit 311 generates the $\sigma_j^\wedge$ and the $\sigma_{j+1}^\wedge$ as mentioned above, thereby achieving the character position interchange by interchanging the element of the first signature σ given to the jth character of the message m and the element of the first signature σ given to the j + 1th character of the message m. The signature in which the $\sigma_j$ and the $\sigma_{j+1}$ of the first signature σ are interchanged is also referred to as an interchanged signature cσ.

In step S418, the homomorphic operation unit 311 generates random numbers $\delta'_0, ..., \delta'_N$, a random number $\eta'_0$, random numbers $\eta'_{1,1}, ..., \eta'_{1,N}$, random numbers $\eta'_{2,1}, ..., \eta'_{2,N}$, and random numbers $\theta'_1, ..., \theta'_N$.

In step S419, the homomorphic operation unit 311 generates elements $\tau_0, ..., \tau_N$ from the dual pairing vector spaces, using the subset of the respective bases $B_0^*, ..., B_N^*$ included in the homomorphic key hk. The homomorphic operation unit 311 generates each of the elements $\tau_0, ..., \tau_N$ from each character $m_i$ contained in the message m, using the subset of the respective bases $B_0^*, ..., B_N^*$ and the message m $(m_1, ..., m_N)$.

In step S420, the homomorphic operation unit 311 generates elements $\sigma_0', ..., \sigma_N'$ of the dual pairing vector spaces, using products between the interchanged signature cσ $(\sigma_0, ..., \sigma_{j-1}, \sigma_j^\wedge, \sigma_{j+1}^\wedge, \sigma_{j+2}, ..., \sigma_N)$ and the elements $\tau$ $(\tau_0, ..., \tau_N)$ of the dual pairing vector spaces. The homomorphic operation unit 311 generates the elements $\sigma_0', ..., \sigma_N'$, using the products between the interchanged signature cσ $(\sigma_0, ..., \sigma_{j-1}, \sigma_j^\wedge, \sigma_{j+1}^\wedge, \sigma_{j+2}, ..., \sigma_N)$ and the elements $\tau$ $(\tau_0, ..., \tau_{j-1}, \tau_{j+1}, \tau_j, \tau_{j+2}, ..., \tau_N)$ in which the jth element and the j + 1th element are interchanged.

In step S421, the homomorphic operation unit 311 generates the second signature σ' including the elements $\sigma_0', ..., \sigma_N'$ generated. Herein, the homomorphic operation unit 311 generates the second signature σ' including the altered message constituted from the $m_1, ..., m_{j-1}, m_{j+1}, M_j, m_{j+2}, ..., m_N$, in which the jth character and the j + 1th character are interchanged and the elements $\sigma_0', ..., \sigma_N'$ generated. That is, the homomorphic operation unit 311 generates the second signature σ', using the interchanged signature cσ and the elements τ.

<Operations of Signature Verification Apparatus 104>

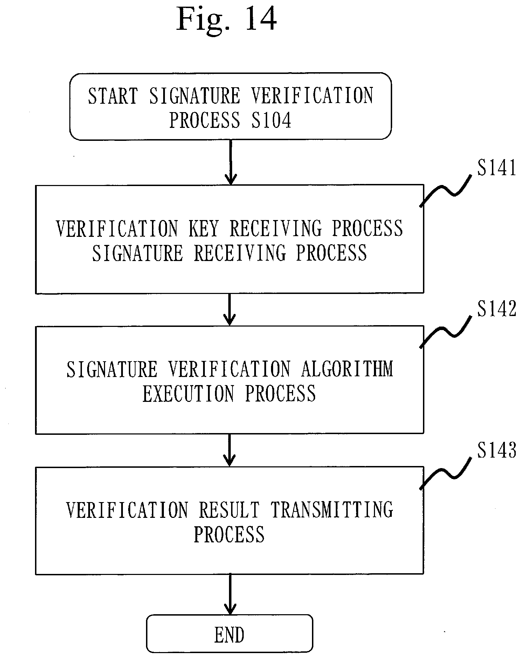

Fig. 14 is a flow diagram illustrating a process flow of the signature verification process S104 according to this embodiment.

In the signature verification process S104, the signature verification apparatus 104 obtains the second signature σ' as the verification signature vσ, and verifies the verification signature vσ, using the verification key vk. Alternatively, the signature verification apparatus 104 obtains the first signature σ as the verification signature vσ, and verifies the verification signature vσ, using the verification key vk.

In step S141, the verification key receiving unit 313 receives the verification key vk, using the input device 903d such as the communication device. The signature receiving unit 314 receives the verification signature vσ, using the input device 903d such as the communication device. The verification key vk and the verification signature vσ are written into the storage device 902d. The verification signature vσ is the first signature σ or the second signature σ'. The verification can be performed by the signature verification process S104 that is similar regardless of whether the verification signature vσ is the first signature σ or the second signature σ'. Herein, a description will be given, assuming that the verification signature vσ is the first signature σ. Step S141 is a verification key receiving process and a signature receiving process.

In step S142, the signature verification unit 315 executes the signature verification algorithm, based on the verification key vk and the verification signature vσ written into the storage device 902d, and outputs 0 or 1 as the verification result r. The verification result r of 0 or 1 is written into the storage device 902d. Step S142 is a signature verification algorithm execution process.

In step S143, the verification result transmitting unit 316 outputs the verification result r written into the storage device 902d, using the output device 904d such as the communication device or the display device. Step S143 is a verification result transmitting process.

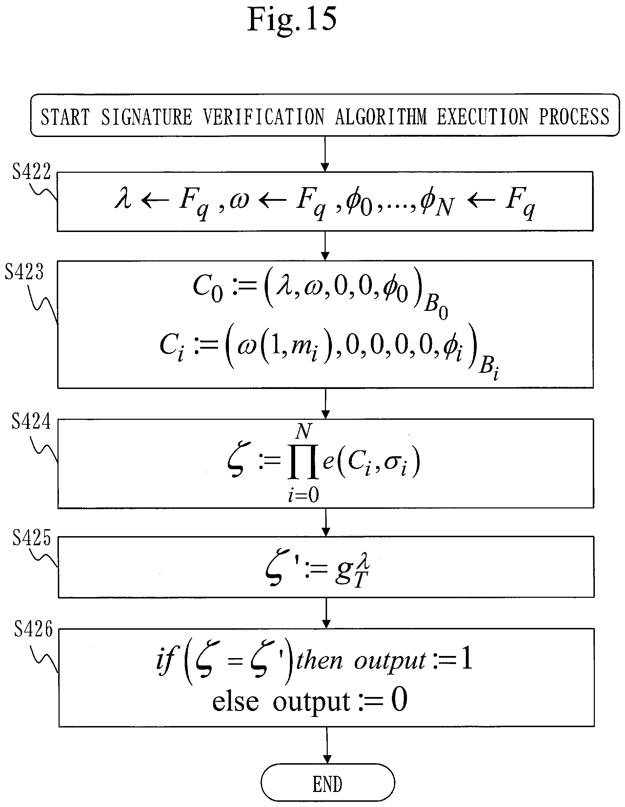

Fig. 15 is a flow diagram of the signature verification algorithm execution process (step S142) that is the execution process of the signature verification algorithm according to this embodiment.

Herein, the signature verification unit 315 inputs, to the signature verification algorithm, the verification key vk the verification key receiving unit 313 has received and the verification signature vσ the signature receiving unit 314 has received.

In step S422, the signature verification unit 315 generates a random number $\lambda$, a random number $\omega$, and random numbers $\varphi_0$, ..., $\varphi_N$.

In step S423, the signature verification unit 315 generates elements $c_0$, ..., $c_N$ of the dual pairing vector spaces, using the bases $B_0$, ..., $B_N$ included in the verification key vk. In step S423, i is each of the integers from 1 to N.

In step S424, the signature verification unit 315 generates $\zeta$ from the elements $\sigma_0$, ..., $\sigma_N$ of the verification signature vσ and the elements $c_0$, ..., $c_N$. The signature verification unit 315 executes a pairing operation with respect to the elements $c_0$, ..., $c_N$ and the verification signature vσ, and generates the operation result $\zeta$ of the pairing operation.

In step S425, the signature verification unit 351 generates $\zeta'$ from the random number $\lambda$ and the generating element $g_T$.

In step S426, the signature verification unit 315 verifies the verification signature vσ, based on the operation result $\zeta$ of the pairing operation and the $\zeta'$ generated from the random number $\lambda$ and the element $g_T$. The signature verification unit 315 compares the $\zeta$ with the $\zeta'$, outputs 1 as the verification result r when the $\zeta$ and the $\zeta'$ are equal, and outputs 0 as the verification result r otherwise.

The explanation of each of the homomorphic signature process S100 and the homomorphic signature method 500 in the cryptographic system 100 according to this embodiment is finished by the above description.

* * * Description of Effects of This Embodiment * * *

As mentioned above, according to the cryptographic system in this embodiment, interchange of character positions in a character string can be securely implemented by using a mathematical structure different from the mathematical structures used in the conventional schemes.

Further, according to the cryptographic system in this embodiment, a message to be altered and an alterable range can be controlled by the homomorphic key that is dedicated.

*** Alternative Configuration ***

In this embodiment, the functions of each apparatus of the cryptographic system 100 are implemented by the software. As a variation example, however, the functions of each apparatus of the cryptographic system 100 may be implemented by hardware.

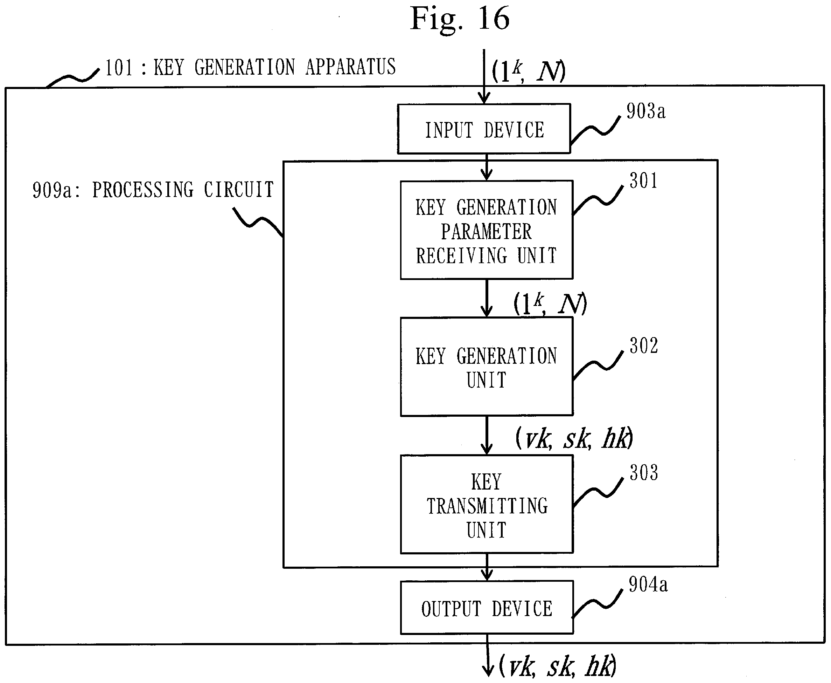

The variation example of this embodiment will be described, using Figs. 16 to 19.

Fig. 16 is a diagram illustrating a configuration of the key generation apparatus 101 according to the variation example of this embodiment.

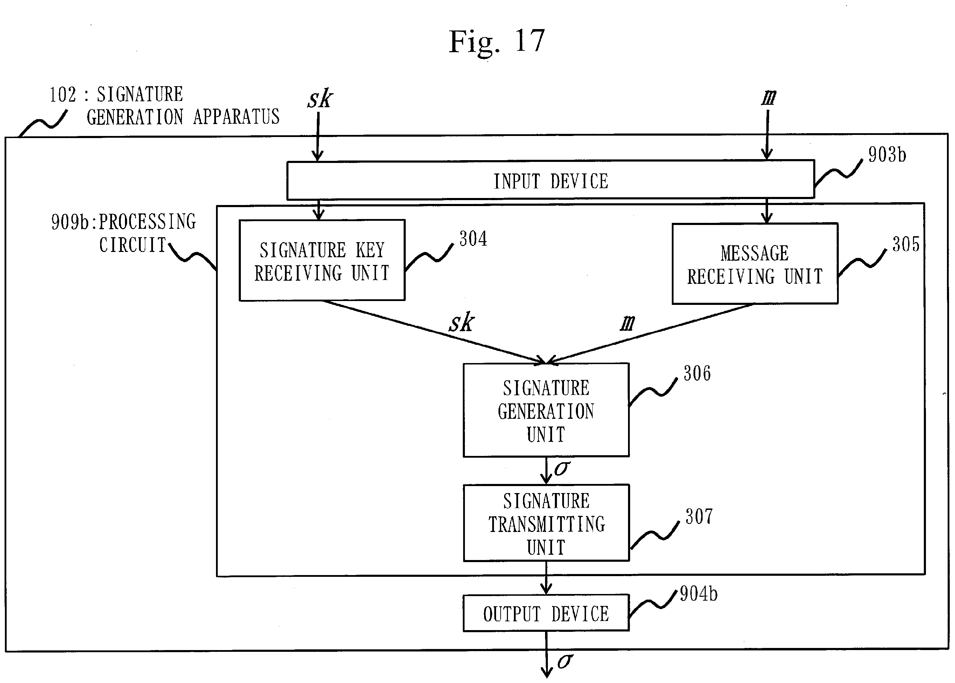

Fig. 17 is a diagram illustrating a configuration of the signature generation apparatus 102 according to the variation example of this embodiment.

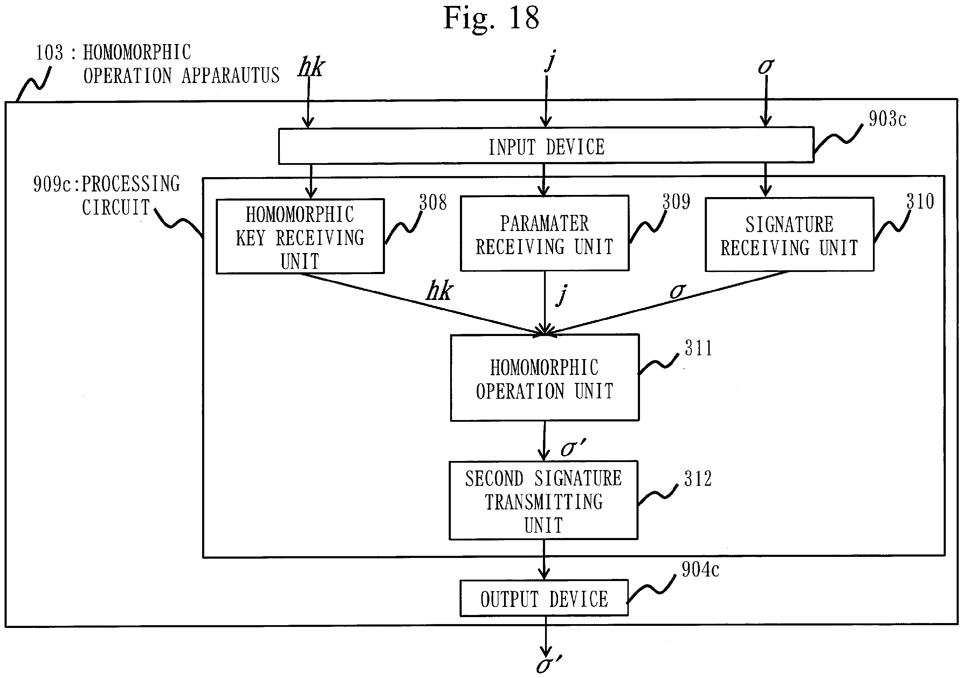

Fig. 18 is a diagram illustrating a configuration of the homomorphic operation apparatus 103 according to the variation example of this embodiment.

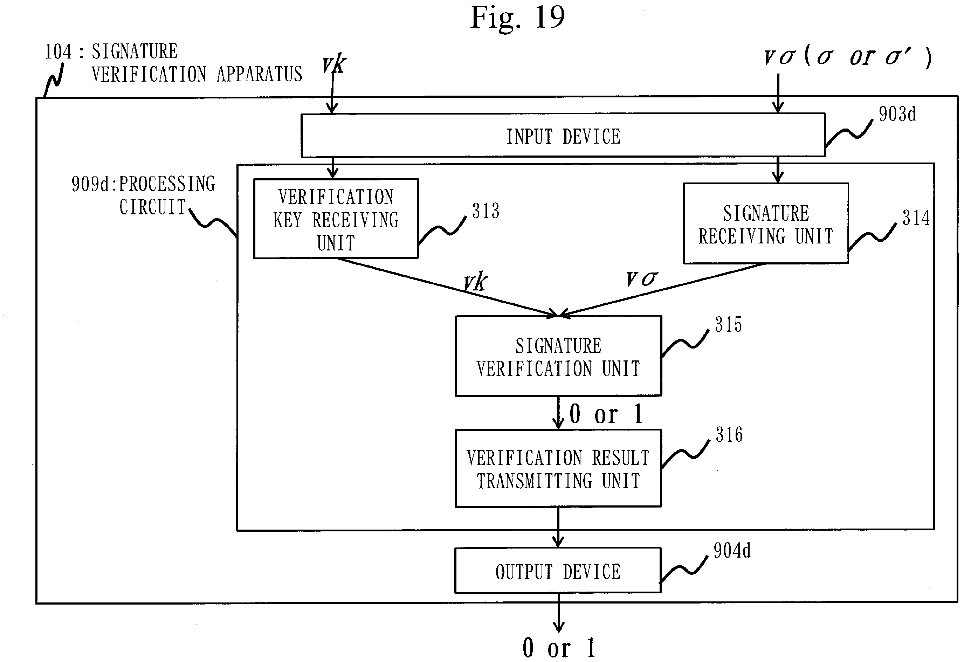

Fig. 19 is a diagram illustrating a configuration of the signature verification apparatus 104 according to the variation example of this embodiment.

As illustrated in Fig. 16, the key generation apparatus 101 includes hardware such as a processing circuit 909a, the input device 903a, and the output device 904a.

As illustrated in Fig. 17, the signature generation apparatus 102 includes hardware such as a processing circuit 909b, the input device 903b, and the output device 904b.

As illustrated in Fig. 18, the homomorphic operation apparatus 103 includes hardware such as a processing circuit 909c, the input device 903c, and the output device 904c.

As illustrated in Fig. 19, the signature verification apparatus 104 includes hardware such as a processing circuit 909d, the input device 903d, and the output device 904d.

In the following description, the processing circuits 909a, 909b, 909c, and 909d will be collectively referred to as a processing circuit 909. The same holds true for the input device 903 and the output device 904.

The processing circuit 909 is an electronic circuit dedicated for implementing the function of each "unit". Specifically, the processing circuit 909 is a single circuit, a composite circuit, a programmed processor, a parallel-programmed processor, a logic IC, a GA (Gate Array), an ASIC (Application Specific Integrated Circuit), or an FPGA

(Field-Programmable Gate Array).

The function of each "unit" may be implemented by one processing circuit 909, or may be implemented by being distributed into a plurality of the processing circuits 909.

As another variation example, the functions of each apparatus of the cryptographic system 100 may be implemented by a combination of the software and the hardware. That is, a part of the functions of each apparatus of the cryptographic system 100 may be implemented by the hardware that is dedicated and a remainder of the functions may be implemented by the software.

The processor 901, the storage device 902, and the processing circuit 909 are collectively referred to as "processing circuitry". That is, even if the configuration of each apparatus in the cryptographic system 100 is the configuration illustrated in any one of Figs. 2 to 5 and Figs. 16 to 19, the function of each "unit" is implemented by the processing circuitry.

Each "unit" may be read as a "step", a "procedure", or a "process". Further, the function of each "unit" may be implemented by firmware.

In this embodiment, the description has been given about a case where he cryptographic system 100 includes the key generation apparatus 101, the signature generation apparatus 102, the homomorphic operation apparatus 103, and the signature verification apparatus 104, and each apparatus is one computer. However, the key generation apparatus 101 and the signature generation apparatus 102 may be one computer, for example. Alternatively, the signature generation apparatus 102 and the homomorphic operation apparatus 103 may be one computer. Alternatively, all the apparatuses may be implemented by one computer.

In this embodiment, the first signature σ and the second signature σ' each include the message. However, the first signature σ and the second signature σ' may be each added to the message.

The embodiment of the present invention has been described above; however, this embodiment may be implemented in part. Specifically, any one of or an arbitrary combination of some of what are described as the "units" in the description of the embodiment may be adopted. Note that the present invention is not limited to this embodiment, and various modifications may be made as necessary.

Reference Signs List

100: cryptographic system; 101: key generation apparatus; 102: signature generation apparatus; 103: homomorphic operation apparatus; 104: signature verification apparatus; 301: key generation parameter receiving unit; 302: key generation unit; 303: key transmitting unit; 304: signature key receiving unit; 305: message receiving unit; 306: signature generation unit; 307: signature transmitting unit; 308: homomorphic key receiving unit; 309: parameter receiving unit; 310: signature receiving unit; 311: homomorphic operation unit; 312: second signature transmitting unit; 313: verification key receiving unit; 314: signature receiving unit; 315: signature verification unit; 316: verification result transmitting unit; 500: homomorphic signature method; 510: homomorphic signature program; 901, 901a, 901b, 901c, 901d: processor; 902, 902a, 902b, 902c, 902d: storage device; 903, 903a, 903b, 903c, 903d: input device; 904, 904a, 904b, 904c, 904d: output device; 909, 909a, 909b, 909c, 909d: processing circuit; S100: homomorphic signature process; S101: key generation process; S102: signature generation process; S103: homomorphic operation process; S104: signature verification process; sk: signature key; hk: homomorphic key; vk: verification key; σ: first signature; σ': second signature; cσ: interchanged signature; r: verification result; m: message; vσ: verification signature

**Claims**

1. A cryptographic system (100) comprising:

a key generation apparatus (101) to generate a signature key including a subset of respective bases $B_0^*, ..., B_N^*$ of dual pairing spaces (N being an integer not less than two), using the bases $B_0^*, ..., B_N^*$ where the bases after the $B_2^*$ are generated by using N - 1 transformation matrices $W_1, ..., W_{N-1}$;
a signature generation apparatus (102) to generate a first signature for a message including N characters, using the signature key, the signature generation apparatus (102) generating a set of elements $\sigma_1, ..., \sigma_N$ being elements of the dual pairing vector spaces and including each character contained in the message, using the subset of the respective bases $B_0^*, ..., B_N^*$ included in the signature key and the message, and generating the first signature including the set of the elements $\sigma_1, ..., \sigma_N$ generated; and
a homomorphic operation apparatus (103) to generate a second signature for an altered message where two characters at different positions in the message are interchanged, using the first signature and a homomorphic key different from the signature key, the homomorphic operation apparatus (103) obtaining a parameter and generating the second signature for the altered message where a jth (j being an integer not less than one and not more than N - 1) character and a j + 1 character in the message are interchanged, using the parameter, the first signature, and the homomorphic key, the jth being a value of the parameter,

wherein the key generation apparatus (101) generates the homomorphic key including the transformation matrices $W_1$, ..., $W_{N-1}$ and the subset of the respective bases $B_0^*$, ..., $B_N^*$, and wherein using, among the transformation matrices $W_1$, ..., $W_{N-1}$ included in the homomorphic key, the jth transformation matrix $W_j$ where the jth is the value of the parameter, the homomorphic operation apparatus (103) interchanges the jth $\sigma_j$ and the j + 1th $\sigma_{j+1}$ in the set of the elements $\sigma_1$, ..., $\sigma_N$ included in the first signature wherein the jth is the value of the parameter, thereby generating an interchanged signature where the $\sigma_j$ and the $\sigma_{j+1}$ are interchanged, and generates the second signature, using the interchanged signature.

2. The cryptographic system (100) according to claim 1, wherein the homomorphic operation apparatus (103) generates elements $\tau_0$, ..., $\tau_N$ from the dual pairing vector spaces, using the subset of the respective bases $B_0^*$, ..., $B_N^*$ included in the homomorphic key, and generates the second signature, using products between the interchanged signature and the elements $\tau_0$, ..., $\tau_N$.

3. The cryptographic system (100) according to claim 1 or 2,
wherein the key generation apparatus (101) further generates a verification key including the subset of the respective bases $B_0^*$, ..., $B_N^*$ of the dual pairing vector spaces, and
wherein the cryptographic system (100) further comprises a signature verification apparatus (104) to obtain the second signature as a verification signature and verify the verification signature, using the verification key.

4. The cryptographic system (100) according to claim 3, wherein the signature verification apparatus (104) obtains the first signature as the verification signature, and verifies the verification signature, using the verification key.

5. The cryptographic system (100) according to claim 3 or 4,
wherein the signature verification apparatus (104) generates elements $c_0$, ..., $c_N$ of the dual pairing vector spaces, using the bases $B_0$, ..., $B_N$ included in the verification key, executes a pairing operation with respect to the elements $c_0$, ..., $c_N$ and the verification signature, and verifies the verification signature, based on an operation result of the pairing operation.

6. A homomorphic signature method comprising:

by a key generation apparatus (101), generating a signature key including a subset of respective bases $B_0^*$, ..., $B_N^*$ of dual pairing spaces (N being an integer not less than two), using the bases $B_0^*$, ..., $B_N^*$ where the bases after the $B_2^*$ are generated by using N - 1 transformation matrices $W_1$, ..., $W_{N-1}$;
by a signature generation apparatus (102), generating a set of elements $\sigma_1$,..., $\sigma_N$ being elements of the dual pairing vector spaces and including each character contained in a message including N characters, using the subset of the respective bases $B_0^*$, ..., $B_N^*$ included in the signature key and the message, and generating a first signature for the message, the first signature including the set of the elements $\sigma_1$, ..., $\sigma_N$ generated; and
by a homomorphic operation apparatus (103), obtaining a parameter and generating a second signature for an altered message where a jth (j being an integer not less than one and not more than N - 1) character and a j + 1 character in the message are interchanged, using the parameter, the first signature, and a homomorphic key different from the signature key, the jth being a value of the parameter,
wherein the key generation apparatus (101) generates the homomorphic key including the transformation matrices $W_1$, ..., $W_{N-1}$ and the subset of the respective bases $B_0^*$, ..., $B_N^*$, and wherein using, among the transformation matrices $W_1$, ..., $W_{N-1}$ included in the homomorphic key, the jth transformation matrix $W_j$ where the jth is the value of the parameter, the homomorphic operation apparatus (103) interchanges the jth $\sigma_j$ and the j + 1th $\sigma_{j+1}$ in the set of the elements $\sigma_1$, ..., $\sigma_N$ included in the first signature wherein the jth is the value of the parameter, thereby generating an interchanged signature where the $\sigma_j$ and the $\sigma_{j+1}$ are interchanged, and generates the second signature, using the interchanged signature.

7. A homomorphic signature program to cause a computer to execute:

a key generation process of generating a signature key including a subset of respective bases $B_0^*$, ..., $B_N^*$ of dual pairing spaces (N being an integer not less than two), using the bases $B_0^*$, ..., $B_N^*$ where the bases after the $B_2^*$ are generated by using N - 1 transformation matrices $W_1$, ..., $W_{N-1}$;

a signature generation process of generating a set of elements $\sigma_1, ..., \sigma_N$ being elements of the dual pairing vector spaces and including each character contained in a message including N characters, using the subset of the respective bases $B_0^*, ..., B_N^*$ included in the signature key and the message, and generating a first signature for the message, the first signature including the set of the elements $\sigma_1, ..., \sigma_N$ generated; and a homomorphic operation process of obtaining a parameter and generating a second signature for an altered message where a jth (j being an integer not less than one and not more than N - 1) character and a j + 1 character in the message are interchanged, using the parameter, the first signature, and a homomorphic key different from the signature key, the jth being a value of the parameter,

wherein in the key generation process, the homomorphic key including the transformation matrices $W_1, ..., W_{N-1}$ and the subset of the respective bases $B_0^*, ..., B_N^*$ is generated, and wherein in the homomorphic operation process, using, among the transformation matrices $W_1, ..., W_{N-1}$ included in the homomorphic key, the jth transformation matrix $W_j$ where the jth is the value of the parameter, the jth $\sigma_j$ and the j + 1th $\sigma_{j+1}$ in the set of the elements $\sigma_1, ..., \sigma_N$ included in the first signature wherein the jth is the value of the parameter are interchanged, thereby generating an interchanged signature where the $\sigma_j$ and the $\sigma_{j+1}$ are interchanged, and the second signature is generated, using the interchanged signature.

**Patentansprüche**

1. Kryptographisches System (100), umfassend:

   eine Schlüsselerzeugungsvorrichtung (101) zum Erzeugen eines Signaturschlüssels, der eine Teilmenge von jeweiligen Basen $B_0^*, ..., B_N^*$ von Dualpaarungsräumen umfasst (worin N eine Ganzzahl ist, die nicht kleiner als Zwei ist), und zwar durch Verwendung der Basen $B_0^*, ..., B_N^*$, wobei die Basen nach der $B_2^*$ durch Verwendung von N - 1 Transformationsmatrizen $W_1, ..., W_{N-1}$ erzeugt werden;
   eine Signaturerzeugungsvorrichtung (102) zum Erzeugen einer ersten Signatur für eine Nachricht, die N Zeichen umfasst, und zwar durch Verwendung des Signaturschlüssels, wobei die Signaturerzeugungsvorrichtung (102) eine Menge von Elementen $\sigma_1, ..., \sigma_N$ erzeugt, die Elemente der Dualpaarungs-Vektorräume sind und jedes in der Nachricht enthaltene Zeichen umfassen, und zwar durch Verwendung der Teilmenge der jeweiligen Basen $B_0^*, ..., B_N^*$, die in dem Signaturschlüssel und der Nachricht enthalten sind, und durch Erzeugen der ersten Signatur, welche die Menge der erzeugten Elemente $\sigma_1, ..., \sigma_N$ umfasst; und
eine homomorphe Operationsvorrichtung (103) zum Erzeugen einer zweiten Signatur für eine abgeänderte Nachricht, in der zwei Zeichen an unterschiedlichen Positionen in der Nachricht ausgetauscht sind, und zwar durch Verwendung der ersten Signatur und eines homomorphen Schlüssels, der sich vom Signaturschlüssel unterscheidet, wobei die homomorphe Operationsvorrichtung (103) einen Parameter erhält und die zweite Signatur für die abgeänderte Nachricht erzeugt, in der ein j-tes (worin j eine Ganzzahl ist, die nicht kleiner als Eins und nicht größer als N - 1 ist) Zeichen und ein (j + 1)tes Zeichen in der Nachricht ausgetauscht sind, und zwar durch Verwendung des Parameters, der ersten Signatur und des homomorphen Schlüssels, wobei das j-te ein Wert des Parameters ist, wobei die Schlüsselerzeugungsvorrichtung (101) den homomorphen Schlüssel erzeugt, der die Transformationsmatrizen $W_1, ..., W_{N-1}$ und die Teilmenge der jeweiligen Basen $B_0^*, ..., B_N^*$ umfasst, und
wobei ein Verwenden der j-ten Transformationsmatrix $W_j$ aus den Transformationsmatrizen $W_1, ..., W_{N-1}$, die in dem homomorphen Schlüssel enthalten sind, in welcher das j-te der Parameterwert ist, die homomorphe Operationsvorrichtung (103) das j-te $\sigma_j$ und das (j + 1)te $\sigma_{j+1}$ in der Menge von Elementen $\sigma_1, ..., \sigma_N$ austauscht, die in der ersten Signatur enthalten sind, wobei das j-te der Parameterwert ist, wodurch eine ausgetauschte Signatur erzeugt wird, in der das $\sigma_j$ und das $\sigma_{j+1}$ ausgetauscht sind, und die zweite Signatur erzeugt, und zwar durch Verwendung der ausgetauschten Signatur.

2. Kryptographisches System (100) gemäß Anspruch 1,
   wobei die homomorphe Operationsvorrichtung (103) Elemente $\tau_0, ..., \tau_N$ aus den Dualpaarungs-Vektorräumen durch Verwendung der Teilmenge der jeweiligen Basen $B_0^*, ..., B_N^*$, die in dem homomorphen Schlüssel enthalten sind, erzeugt, und die zweite Signatur durch Verwendung von Produkten zwischen der ausgetauschten Signatur und den Elementen $\tau_0, ..., \tau_N$ erzeugt.

3. Kryptographisches System (100) gemäß Anspruch 1 oder 2,
   wobei die Schlüsselerzeugungsvorrichtung (101) ferner einen Verifikationsschlüssel erzeugt, der die Teilmenge der jeweiligen Basen $B_0^*, ..., B_N^*$ der Du-

alpaarungs-Vektorräume umfasst, und wobei das kryptographische System (100) ferner eine Signaturverifikationsvorrichtung (104) umfasst, um die zweite Signatur als eine Verifikationssignatur zu erhalten und die Verifikationssignatur zu verifizieren, und zwar durch Verwendung des Verifikationsschlüssels.

4.  Kryptographisches System (100) gemäß Anspruch 3,
    wobei die Signaturverifikationsvorrichtung (104) die erste Signatur als die Verifikationssignatur erhält und die Verifikationssignatur verifiziert, und zwar durch Verwendung des Verifikationsschlüssels.

5.  Kryptographisches System (100) gemäß Anspruch 3 oder 4, wobei die Signaturverifikationsvorrichtung (104) Elemente $c_0$, ..., $c_N$ der Dualpaarungs-Vektorräume durch Verwendung der in dem Verifikationsschlüssel enthaltenen Basen $B_0^*$, ..., $B_N^*$ erzeugt, eine Paarungsoperation mit Bezug auf die Elemente $c_0$, ..., $c_N$ und die Verifikationssignatur ausführt, und die Verifikationssignatur auf Basis eines Operationsergebnisses der Paarungsoperation verifiziert.

6.  Homomorphes Signaturverfahren, umfassend:

    Erzeugen eines Signaturschlüssels durch eine Schlüsselerzeugungsvorrichtung (101), der eine Teilmenge von jeweiligen Basen $B_0^*$, ..., $B_N^*$ von Dualpaarungsräumen umfasst (worin N eine Ganzzahl ist, die nicht kleiner als Zwei ist), und zwar durch Verwendung der Basen $B_0^*$, ..., $B_N^*$, wobei die Basen nach der $B_2^*$ durch Verwendung von N - 1 Transformationsmatrizen $W_1$, ..., $W_{N-1}$ erzeugt werden;
    Erzeugen einer Menge von Elementen $\sigma_1$, ..., $\sigma_N$ durch eine Signaturerzeugungsvorrichtung (102), die Elemente der Dualpaarungs-Vektorräume sind und jedes in einer Nachricht, die N Zeichen enthält, enthaltene Zeichen umfassen, und zwar durch Verwendung des Teilmenge der jeweiligen Basen $B_0^*$, ..., $B_N^*$, die in dem Signaturschlüssel und der Nachricht enthalten sind, und Erzeugen einer ersten Signatur für die Nachricht, wobei die erste Signatur die erzeugte Menge von Elementen $\sigma_1$, ..., $\sigma_N$ umfasst; und
    Erhalten eines Parameters durch eine homomorphe Operationsvorrichtung (103) und Erzeugen einer zweiten Signatur für eine abgeänderte Nachricht, in der ein j-tes (worin j eine Ganzzahl ist, die nicht kleiner als Eins und nicht größer als N - 1 ist) Zeichen und ein (j + 1)tes Zeichen in der Nachricht ausgetauscht sind, und zwar durch Verwendung des Parameters, der ersten Signatur und eines homomorphen Schlüssels, der sich vom Signaturschlüssel unterscheidet, wobei das j-te ein Wert des Parameters ist,
wobei die Schlüsselerzeugungsvorrichtung (101) den homomorphen Schlüssel erzeugt, der die Transformationsmatrizen $W_1$, ..., $W_{N-1}$ und die Teilmenge der jeweiligen Basen $B_0^*$, ..., $B_N^*$ umfasst, und
wobei durch Verwendung der j-ten Transformationsmatrix $W_j$ aus den Transformationsmatrizen $W_1$, ..., $W_{N-1}$, die im homomorphen Schlüssel enthalten sind, in der das j-te der Parameterwert ist, die homomorphe Operationsvorrichtung (103) das j-te $\sigma_j$ und das (j + 1)te $\sigma_{j+1}$ in der Menge von Elementen $\sigma_1$, ..., $\sigma_N$, die in der ersten Signatur enthalten sind, austauscht, worin das j-te der Parameterwert ist, wodurch eine ausgetauschte Signatur erzeugt wird, in der das $\sigma_j$ und das $\sigma_{j+1}$ ausgetauscht sind, und die zweite Signatur erzeugt, und zwar durch Verwendung der ausgetauschten Signatur.

7.  Homomorphes Signaturprogramm, um zu bewirken, dass ein Computer Folgendes ausführt:

    einen Schlüsselerzeugungsvorgang zur Erzeugung eines Signaturschlüssels, der eine Teilmenge von jeweiligen Basen $B_0^*$, ..., $B_N^*$ von Dualpaarungsräumen umfasst (worin N eine Ganzzahl ist, die nicht kleiner als Zwei ist), und zwar durch Verwendung der Basen $B_0^*$, ..., $B_N^*$, wobei die Basen nach der $B_2^*$ durch Verwendung von N - 1 Transformationsmatrizen $W_1$, ..., $W_{N-1}$ erzeugt werden;
    einen Signaturerzeugungsvorgang zur Erzeugung einer Menge von Elementen $\sigma_1$, ..., $\sigma_N$, die Elemente der Dualpaarungs-Vektorräume sind und jedes in einer Nachricht, die N Zeichen enthält, enthaltene Zeichen umfassen, und zwar durch Verwendung der Teilmenge der jeweiligen Basen $B_0^*$, ..., $B_N^*$, die in dem Signaturschlüssel und der Nachricht enthalten sind, und Erzeugen einer ersten Signatur für die Nachricht, wobei die erste Signatur die erzeugte Menge von Elementen $\sigma_1$, ..., $\sigma_N$ umfasst; und
    einen homomorphen Operationsvorgang zum Erhalten eines Parameters und Erzeugen einer zweiten Signatur für eine abgeänderte Nachricht, in der ein j-tes (worin j eine Ganzzahl ist, die nicht kleiner als Eins und nicht größer als N - 1 ist) Zeichen und ein (j + 1)tes Zeichen in der Nachricht ausgetauscht sind, und zwar durch Verwendung eines Parameters, der ersten Signatur und eines homomorphen Schlüssels, der sich vom Signaturschlüssel unterscheidet, wobei das j-te ein Wert des Parameters ist,
    wobei in dem Schlüsselerzeugungsvorgang der homomorphe Schlüssel, der die Transformationsmatrizen $W_1$, ..., $W_{N-1}$ und die Teilmenge der jeweiligen Basen $B_0^*$, ..., $B_N^*$ umfasst, er-

zeugt wird, und

wobei in dem homomorphen Operationsvorgang durch Verwenden der j-ten Transformationsmatrix $W_j$ aus den Transformationsmatrizen $W_1, ..., W_{N-1}$, die im homomorphen Schlüssel enthalten sind, in der das j-te der Parameterwert ist, das j-te $\sigma_j$ mit dem (j + 1)-ten $\sigma_{j+1}$ in der Menge von Elementen $\sigma_1, ..., \sigma_N$, die in der ersten Signatur enthalten sind, wobei das j-te der Parameterwert ist, ausgetauscht wird, wodurch eine ausgetauschte Signatur erzeugt wird, bei der das $\sigma_j$ und das $\sigma_{j+1}$ ausgetauscht werden, und die zweite Signatur erzeugt wird, und zwar durch Verwendung der ausgetauschten Signatur.

## Revendications

1. Système cryptographique (100) comprenant :

un appareil de génération de clé (101) destiné à générer une clé de signature incluant un sous-ensemble de bases respectives « $B_0^*, ..., B_N^*$ » d'espaces vectoriels à double appariement (« N » étant un nombre entier non inférieur à deux), en utilisant les bases « $B_0^*, ..., B_N^*$ » où les bases après la base « $B_2^*$ » sont générées en utilisant « N-1 » matrices de transformation « $W_1, ..., W_{N-1}$ » ;

un appareil de génération de signature (102) destiné à générer une première signature pour un message incluant « N » caractères, en utilisant la clé de signature, l'appareil de génération de signature (102) générant un ensemble d'éléments « $\sigma_1, ..., \sigma_N$ » correspondant à des éléments des espaces vectoriels à double appariement et incluant chaque caractère contenu dans le message, en utilisant le sous-ensemble des bases respectives « $B_0^*, ..., B_N^*$ » incluses dans la clé de signature et le message, et générant la première signature incluant l'ensemble des éléments « $\sigma_1, ..., \sigma_N$ » générés ; et

un appareil d'opération homomorphe (103) destiné à générer une seconde signature pour un message modifié où deux caractères à différentes positions dans le message sont permutés, en utilisant la première signature et une clé homomorphe différente de la clé de signature, l'appareil d'opération homomorphe (103) obtenant un paramètre et générant la seconde signature pour le message modifié où un j-ème caractère (« j » étant un nombre entier non inférieur à un et non supérieur à « N-1 ») et un caractère « j+1 » dans le message sont permutés, en utilisant le paramètre, la première signature, et la clé homomorphe, où la valeur j-ème correspond à une valeur du paramètre ;

dans lequel l'appareil de génération de clé (101) génère la clé homomorphe en incluant les matrices de transformation « $W_1, ..., W_{N-1}$ » et le sous-ensemble des bases respectives « $B_0^*, ..., B_N^*$ » ; et

dans lequel, en utilisant, parmi les matrices de transformation « $W_1, ..., W_{N-1}$ » incluses dans la clé homomorphe, la j-ème matrice de transformation « $W_j$ », où j-ème correspond à la valeur du paramètre, l'appareil d'opération homomorphe (103) permute le j-ème élément « $\sigma_j$ » et le j+1-ème élément « $\sigma_{j+1}$ » dans l'ensemble des éléments « $\sigma_1, ..., \sigma_N$ » inclus dans la première signature, où j-ème correspond à la valeur du paramètre, ce qui permet de générer par conséquent une signature permutée où l'élément « $\sigma_j$ » et l'élément « $\sigma_{j+1}$ » sont permutés, et génère la seconde signature, en utilisant la signature permutée.

2. Système cryptographique (100) selon la revendication 1,
dans lequel l'appareil d'opération homomorphe (103) génère des éléments « $\tau_0, ..., \tau_N$ » à partir des espaces vectoriels à double appariement, en utilisant le sous-ensemble des bases respectives « $B_0^*, ..., B_N^*$ » incluses dans la clé homomorphe, et génère la seconde signature, en utilisant des produits entre la signature permutée et les éléments « $\tau_0, ..., \tau_N$ ».

3. Système cryptographique (100) selon la revendication 1 ou 2,

dans lequel l'appareil de génération de clé (101) génère en outre une clé de vérification incluant le sous-ensemble des bases respectives « $B_0^*, ..., B_N^*$ » des espaces vectoriels à double appariement ; et

dans lequel le système cryptographique (100) comprend en outre un appareil de vérification de signature (104) destiné à obtenir la seconde signature, en tant qu'une signature de vérification, et à vérifier la signature de vérification, en utilisant la clé de vérification.

4. Système cryptographique (100) selon la revendication 3,
dans lequel l'appareil de vérification de signature (104) obtient la première signature, en tant qu'une signature de vérification, et vérifie la signature de vérification, en utilisant la clé de vérification.

5. Système cryptographique (100) selon la revendication 3 ou 4,
dans lequel l'appareil de vérification de signature (104) génère des éléments « $c_0, ..., c_N$ » des espaces vectoriels à double appariement, en utilisant les

bases « $B_0$, ..., $B_N$ » incluses dans la clé de vérification, exécute une opération d'appariement par rapport aux éléments « $c_0$, ..., $c_N$ » et à la signature de vérification, et vérifie la signature de vérification, sur la base d'un résultat d'opération de l'opération d'appariement.

**6.** Procédé de signature homomorphe comprenant les étapes ci-dessous consistant à :

par le biais d'un appareil de génération de clé (101), générer une clé de signature incluant un sous-ensemble de bases respectives « $B_0^*$, ..., $B_N^*$ » d'espaces vectoriels à double appariement (« N » étant un nombre entier non inférieur à deux), en utilisant les bases « $B_0^*$, ..., $B_N^*$ » où les bases après la base « $B_2^*$ » sont générées en utilisant « N-1 » matrices de transformation « $W_1$, ..., $W_{N-1}$ » ;
par le biais d'un appareil de génération de signature (102), générer un ensemble d'éléments « $\sigma_1$, ..., $\sigma_N$ » correspondant à des éléments des espaces vectoriels à double appariement et incluant chaque caractère contenu dans un message incluant « N » caractères, en utilisant le sous-ensemble des bases respectives « $B_0^*$, ..., $B_N^*$ » incluses dans la clé de signature et le message, et générer une première signature pour le message, la première signature incluant l'ensemble des éléments « $\sigma_1$, ..., $\sigma_N$ » générés ; et
par le biais d'un appareil d'opération homomorphe (103), obtenir un paramètre et générer une seconde signature pour un message modifié où un j-ème caractère (« j » étant un nombre entier non inférieur à un et non supérieur à « N-1 ») et un caractère « j+1 » dans le message sont permutés, en utilisant le paramètre, la première signature, et une clé homomorphe différente de la clé de signature, où j-ème correspond à une valeur du paramètre ;
dans lequel l'appareil de génération de clé (101) génère la clé homomorphe en incluant les matrices de transformation « $W_1$, ..., $W_{N-1}$ » et le sous-ensemble des bases respectives « $B_0^*$, ..., $B_N^*$ » ; et
dans lequel, en utilisant, parmi les matrices de transformation « $W_1$, ..., $W_{N-1}$ » incluses dans la clé homomorphe, la j-ème matrice de transformation « $W_j$ », où j-ème correspond à la valeur du paramètre, l'appareil d'opération homomorphe (103) permute le j-ème élément « $\sigma_j$ » et le j+1-ème élément « $\sigma_{j+1}$ » dans l'ensemble des éléments « $\sigma_1$, ..., $\sigma_N$ » inclus dans la première signature, dans lequel j-ème correspond à la valeur du paramètre, ce qui permet de générer par conséquent une signature permutée où l'élément « $\sigma_j$ » et l'élément « $\sigma_{j+1}$ » sont permutés, et génère la seconde signature, en utilisant la signature permutée.

**7.** Programme de signature homomorphe destiné à amener un ordinateur à exécuter :

un processus de génération de clé consistant à générer une clé de signature incluant un sous-ensemble de bases respectives « $B_0^*$, ..., $B_N^*$ » d'espaces vectoriels à double appariement (« N » étant un nombre entier non inférieur à deux), en utilisant les bases « $B_0^*$, ..., $B_N^*$ » où les bases après la base « $B_2^*$ » sont générées en utilisant « N-1 » matrices de transformation « $W_1$, ..., $W_{N-1}$ » ;
un processus de génération de signature consistant à générer un ensemble d'éléments « $\sigma_1$, ..., $\sigma_N$ » correspondant à des éléments des espaces vectoriels à double appariement et incluant chaque caractère contenu dans un message incluant « N » caractères, en utilisant le sous-ensemble des bases respectives « $B_0^*$, ..., $B_N^*$ » incluses dans la clé de signature et le message, et à générer une première signature pour le message, la première signature incluant l'ensemble des éléments « $\sigma_1$, ..., $\sigma_N$ » générés ; et
un processus d'opération homomorphe consistant à obtenir un paramètre et à générer une seconde signature pour un message modifié où un j-ème caractère (« j » étant un nombre entier non inférieur à un et non supérieur à « N-1 ») et un caractère « j+1 » dans le message sont permutés, en utilisant le paramètre, la première signature, et une clé homomorphe différente de la clé de signature, où j-ème correspond à une valeur du paramètre ;
dans lequel, dans le cadre du processus de génération de clé, la clé homomorphe incluant les matrices de transformation « $W_1$, ..$W_{N-1}$ » et le sous-ensemble des bases respectives « $B_0^*$, ..., $B_N^*$ » est générée ; et
dans lequel, dans le cadre du processus d'opération homomorphe, en utilisant, parmi les matrices de transformation « $W_1$, ..., $W_{N-1}$ » incluses dans la clé homomorphe, la j-ème matrice de transformation « $W_j$ », où j-ème correspond à la valeur du paramètre, le j-ème élément « $\sigma_j$ » et le j+1-ème élément « $\sigma_{j+1}$ » dans l'ensemble des éléments « $\sigma_1$, ..., $\sigma_N$ » inclus dans la première signature, dans lequel j-ème correspond à la valeur du paramètre, sont permutés, ce qui permet de générer par conséquent une signature permutée où l'élément « $\sigma_j$ » et l'élément « $\sigma_{j+1}$ » sont permutés, et la seconde signature est générée, en utilisant la signature permutée.

## Fig. 1

# Fig. 2

$(1^k, N)$

INPUT DEVICE — 903a

901a:PROCESSOR

KEY GENERATION PARAMETER RECEIVING UNIT — 301

$(1^k, N)$

KEY GENERATION UNIT — 302

$(vk, sk, hk)$

902a

STORAGE DEVICE

KEY TRANSMITTING UNIT — 303

OUTPUT DEVICE — 904a

$(vk, sk, hk)$

EP 3 343 830 B1

## Fig. 3

102 : SIGNATURE
GENERATION APPARATUS

$sk$

$m$

INPUT DEVICE — 903b

901b:PROCESSOR

SIGNATURE KEY
RECEIVING UNIT — 304

MESSAGE
RECEIVING UNIT — 305

$sk$

$m$

SIGNATURE
GENERATION
UNIT — 306

902b

STORAGE
DEVICE

$\sigma$

SIGNATURE
TRANSMITTING
UNIT — 307

OUTPUT DEVICE — 904b

$\sigma$

EP 3 343 830 B1

# Fig. 4

**103 : HOMOMORPHIC OPERATION APPARATUS**

Inputs: $hk$, $j$, $\sigma$

**INPUT DEVICE** — 903c

**901c:PROCESSOR**

**HOMOMORPHIC KEY RECEIVING UNIT** — 308

**PARAMETER RECEIVING UNIT** — 309

**SIGNATURE RECEIVING UNIT** — 310

$hk$, $j$, $\sigma$

**HOMOMORPHIC OPERATION UNIT** — 311

**902c**

**STORAGE DEVICE**

$\sigma'$

**SECOND SIGNATURE TRANSMITTING UNIT** — 312

**OUTPUT DEVICE** — 904c

$\sigma'$

## Fig. 5

EP 3 343 830 B1

# Fig. 6

```
┌─────────────────────────────────┐
│   START HOMOMORPHIC SIGNATURE    │
│     METHOD 500 OR HOMOMORPHIC    │
│     SIGNATURE PROCESS S100       │
└─────────────────────────────────┘
                 │
                 ▼                        S101
┌─────────────────────────────────┐
│      KEY GENERATION PROCESS      │
└─────────────────────────────────┘
                 │
                 ▼                        S102
┌─────────────────────────────────┐
│      SIGNATURE GENERATION        │
│            PROCESS               │
└─────────────────────────────────┘
                 │
                 ▼                        S103
┌─────────────────────────────────┐
│     HOMOMORPHIC OPERATION        │
│            PROCESS               │
└─────────────────────────────────┘
                 │
                 ▼                        S104
┌─────────────────────────────────┐
│     SIGNATURE VERIFICATION       │
│            PROCESS               │
└─────────────────────────────────┘
                 │
                 ▼
┌─────────────────────────────────┐
│              END                 │
└─────────────────────────────────┘
```

EP 3 343 830 B1

# Fig. 7

```
┌─────────────────────────────┐
│   START KEY GENERATION       │
│     PROCESS S101             │
└─────────────────────────────┘
              │
              ▼                          ⌇ S111
┌─────────────────────────────┐
│                             │
│   KEY GENERATION PARAMETER   │
│     RECEIVING PROCESS        │
│                             │
└─────────────────────────────┘
              │                          ⌇ S112
              ▼
┌─────────────────────────────┐
│                             │
│   KEY GENERATION ALGORITHM   │
│     EXECUTION PROCESS        │
│                             │
└─────────────────────────────┘
              │                          ⌇ S113
              ▼
┌─────────────────────────────┐
│                             │
│   KEY TRANSMITTING PROCESS   │
│                             │
└─────────────────────────────┘
              │
              ▼
        ┌───────────┐
        │    END    │
        └───────────┘
```

EP 3 343 830 B1

# Fig. 8

START KEY GENERATION ALGORITHM EXECUTION PROCESS

S401
$$\mathbf{P}_0 := \left( q, \mathrm{G}, G_T, g, e \right)$$

S402
$$\mathbf{P}_1 := \left( q, V_0, V_1, G_T, A_0, A_1, e \right)$$

S403
$$\psi \leftarrow F_q$$

S404
$$X_0 := \left( \chi^0_{i,j} \right) \leftarrow GL\left( 5, F_q \right)$$
$$X_1 := \left( \chi^1_{i,j} \right) \leftarrow GL\left( 7, F_q \right)$$

S405
$$\left( \gamma^1_{i,j} \right) := \psi \cdot \left( X_1^T \right)^{-1}$$
$$\left( \gamma^0_{i,j} \right) := \psi \cdot \left( X_0^T \right)^{-1}$$

S406
$$b^0_i := \sum_{j=1}^{N} x^0_{i,j} a^0_j, \; B_0 := \left( b^0_1, ..., b^0_5 \right)$$
$$b^1_i := \sum_{j=1}^{N} x^1_{i,j} a^1_j, \; B_1 := \left( b^1_1, ..., b^1_7 \right)$$

S407
$$b^{0^*}_i := \sum_{j=1}^{N} \gamma^0_{i,j} a^0_j, \; B^*_0 := \left( b^{0^*}_1, ..., b^{0^*}_5 \right)$$
$$b^{1^*}_i := \sum_{j=1}^{N} \gamma^1_{i,j} a^1_j, \; B^*_1 := \left( b^{1^*}_1, ..., b^{1^*}_7 \right)$$

(A)

# Fig. 9

$$(A)$$

S408
$$g_T := e(g,g)^\psi$$

S409
$$W_i \leftarrow GL(7, F_q)$$

S410
$$b_j^{i+1} := b_j^i W_i, \, B_{i+1} := \left(b_1^{i+1}, ..., b_7^{i+1}\right)$$
$$b_j^{i+1^*} := b_j^{i^*}\left(W_i^T\right)^{-1}, \, B_{i+1}^* := \left(b_1^{i+1^*}, ..., b_7^{i+1^*}\right)$$

S411
$$\hat{B}_0 := \left(b_1^0, b_2^0, b_5^0\right), \, \hat{B}_i := \left(b_1^i, b_2^i, b_7^i\right)$$

S412
$$\hat{B}_0^* := \left(b_2^{0^*}, b_4^{0^*}\right), \, \hat{B}_i^* := \left(b_1^{i^*}, b_2^{i^*}, b_5^{i^*}, b_6^{i^*}\right)$$

S413
$$vk := \left(P_0, P_1, \hat{B}_0, ..., \hat{B}_N, \hat{B}_0^*, ..., \hat{B}_N^*\right)$$
$$sk := \left(b_1^{0^*}, vk\right)$$
$$hk := \{hk_i := (W_i, vk)\}$$

END

# Fig. 10

```
┌─────────────────────────────┐
│  START SIGNATURE GENERATION  │
│       PROCESS S102           │
└─────────────────────────────┘
              │
              ▼                        ⌇ S121
┌─────────────────────────────┐
│                             │
│  SIGNATURE KEY RECEIVING PROCESS │
│   MESSAGE RECEIVING PROCESS  │
│                             │
└─────────────────────────────┘
              │                        ⌇ S122
              ▼
┌─────────────────────────────┐
│                             │
│  SIGNATURE GENERATION ALGORITHM │
│      EXECUTION PROCESS       │
│                             │
└─────────────────────────────┘
              │                        ⌇ S123
              ▼
┌─────────────────────────────┐
│                             │
│  SIGNATURE TRANSMITTING PROCESS │
│                             │
└─────────────────────────────┘
              │
              ▼
       ┌──────────────┐
       │     END      │
       └──────────────┘
```

EP 3 343 830 B1

# Fig.11

START SIGNATURE GENERATION ALGORITHM EXECUTION PROCESS

S414
$$\delta_1,...,\delta_N \leftarrow F_q^N , \delta_0 := \sum_{i=1}^{N} \delta_i,$$
$$\eta_0 \leftarrow F_q , \eta_{1,1},...,\eta_{1,N} \leftarrow F_q^N , \eta_{2,1},...,\eta_{2,N} \leftarrow F_q^N$$
$$\theta_1,...,\theta_N \leftarrow F_q^N$$

S415
$$\sigma_0 := \left(1,-\delta_0,0,\eta_0,0\right)_{B_0^*}$$
$$\sigma_i := \left(\delta_i + \theta_i m_i, -\theta_i ,0,0,\eta_{1,i},\eta_{2,i},0\right)_{B_i^*}$$

S416
$$\sigma := \left(m_1,...,m_N,\sigma_0,...,\sigma_N\right)$$

END

Fig. 12

START HOMOMORPHIC OPERATION PROCESS S103

↓

HOMOMORPHIC KEY RECEIVING PROCESS
PARAMETER RECEIVING PROCESS
SIGNATURE RECEIVING PROCESS — S131

↓

HOMOMORPHIC OPERATION PROCESS — S132

↓

SECOND SIGNATURE TRANSMITTING PROCESS — S133

↓

END

# Fig. 13

START HOMOMORPHIC OPERATION ALGORITHM EXECUTION PROCESS

S417
$$\hat{\sigma}_j := \sigma_{j+1} W_j^T$$
$$\hat{\sigma}_{j+1} := \sigma_j \left( W_j^T \right)^{-1}$$

S418
$$\delta_1', \ldots, \delta_N' \leftarrow F_q^N, \delta_0' := \sum_{i=1}^{N} \delta_i'$$
$$\eta_0' \leftarrow F_q, \eta_{1,1}', \ldots, \eta_{1,N}' \leftarrow F_q^N, \eta_{2,1}', \ldots, \eta_{2,N}' \leftarrow F_q^N$$
$$\theta_1', \ldots, \theta_N' \leftarrow F_q^N$$

S419
$$\tau_0 := \left( 0, -\delta_0', 0, \eta_0', 0 \right)_{B_0^*}$$
$$\tau_i := \left( \delta_i' + \theta_i' m_i, -\theta_i', 0, 0, \eta_{1,i}', \eta_{2,i}', 0 \right)_{B_i^*}$$

S420
$$\sigma_0' := \sigma_0 \tau_0$$
$$\sigma_1' := \sigma_1 \tau_1, \ldots, \sigma_{j-1}' := \sigma_{j-1} \tau_{j-1}$$
$$\sigma_j' := \hat{\sigma}_j \tau_{j+1}, \sigma_{j+1}' := \hat{\sigma}_{j+1} \tau_j$$
$$\sigma_{j+2}' := \sigma_{j+2} \tau_{j+2}, \ldots, \sigma_N' := \sigma_N \tau_N$$

S421
$$\sigma' := (m_1, \ldots, m_{j+1}, m_j, \ldots, m_N, \sigma_0', \ldots, \sigma_N')$$

END

## Fig. 14

```
┌─────────────────────────────────┐
│   START SIGNATURE VERIFICATION   │
│         PROCESS S104             │
└─────────────────────────────────┘
                 │
                 ▼
┌─────────────────────────────────┐  S141
│ VERIFICATION KEY RECEIVING PROCESS │
│   SIGNATURE RECEIVING PROCESS    │
└─────────────────────────────────┘
                 │
                 ▼
┌─────────────────────────────────┐  S142
│  SIGNATURE VERIFICATION ALGORITHM │
│       EXECUTION PROCESS          │
└─────────────────────────────────┘
                 │
                 ▼
┌─────────────────────────────────┐  S143
│  VERIFICATION RESULT TRANSMITTING │
│            PROCESS               │
└─────────────────────────────────┘
                 │
                 ▼
          ┌──────────────┐
          │     END      │
          └──────────────┘
```

EP 3 343 830 B1

# Fig.15

START SIGNATURE VERIFICATION ALGORITHM EXECUTION PROCESS

S422

$$\lambda \leftarrow F_q, \omega \leftarrow F_q, \phi_0, ..., \phi_N \leftarrow F_q$$

S423

$$C_0 := \left( \lambda, \omega, 0, 0, \phi_0 \right)_{B_0}$$

$$C_i := \left( \omega(1, m_i), 0, 0, 0, 0, \phi_i \right)_{B_i}$$

S424

$$\zeta := \prod_{i=0}^{N} e(C_i, \sigma_i)$$

S425

$$\zeta' := g_T^{\lambda}$$

S426

$$if \left( \zeta = \zeta' \right) then\ output := 1$$
$$else\ output := 0$$

END

# Fig. 16

101 : KEY GENERATION APPARATUS

$(1^k, N)$

INPUT DEVICE — 903a

909a: PROCESSING CIRCUIT

KEY GENERATION PARAMETER RECEIVING UNIT — 301

$(1^k, N)$

KEY GENERATION UNIT — 302

$(vk, sk, hk)$

KEY TRANSMITTING UNIT — 303

OUTPUT DEVICE — 904a

$(vk, sk, hk)$

# Fig. 17

102 : SIGNATURE
GENERATION APPARATUS

$sk$

$m$

INPUT DEVICE — 903b

909b:PROCESSING
CIRCUIT

SIGNATURE KEY
RECEIVING UNIT — 304

MESSAGE
RECEIVING UNIT — 305

$sk$

$m$

SIGNATURE
GENERATION
UNIT — 306

$\sigma$

SIGNATURE
TRANSMITTING
UNIT — 307

904b

OUTPUT DEVICE

$\sigma$

EP 3 343 830 B1

# Fig. 18

103 : HOMOMORPHIC
OPERATION APPARAUTUS

$hk$     $j$     $\sigma$

INPUT DEVICE — 903c

909c:PROCESSING
CIRCUIT

| HOMOMORPHIC KEY RECEIVING UNIT — 308 | PARAMATER RECEIVING UNIT — 309 | SIGNATURE RECEIVING UNIT — 310 |

$hk$     $j$     $\sigma$

HOMOMORPHIC OPERATION UNIT — 311

$\sigma'$

SECOND SIGNATURE TRANSMITTING UNIT — 312

OUTPUT DEVICE — 904c

$\sigma'$

EP 3 343 830 B1

# Fig. 19

104 : SIGNATURE VERIFICATION APPARATUS

$vk$

$v\sigma\,(\sigma\ or\ \sigma')$

INPUT DEVICE — 903d

909d:PROCESSING CIRCUIT

VERIFICATION KEY RECEIVING UNIT — 313

SIGNATURE RECEIVING UNIT — 314

$vk$

$v\sigma$

SIGNATURE VERIFICATION UNIT — 315

0 or 1

VERIFICATION RESULT TRANSMITTING UNIT — 316

OUTPUT DEVICE — 904d

0 or 1

EP 3 343 830 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5465299 A

- JP 2014158265 A

**Non-patent literature cited in the description**

- Computing on Authenticated Data. **AHN JAE HYUN et al.** Journal of Cryptology. Springer, 18 April 2018, vol. 28
- Predicate- and Attribute-Hiding Inner Product Encryption in a Public Key Setting. **KAWAI YUTAKA et al.** Medical Image Computing and Computer-assisted intervention - MICCAI 2015: 18th International Conference, Munich, Germany, October 5-9, 2015; Proceedings; [Lecture notes in computer science; Lect. Notes computer. Springer International Publishing, 22 November 2013

- Linearly homomorphic structure-preserving signatures and their applications. **B. LIBERT ; M. JOYE ; M. YUNG.** Advances in Cryptology-CRYPTO 2013. LNCS, 2013, vol. 8043, 289-307
- Computing on Authenticated Data: New Privacy Definitions and Constructions. **N. ATTRAPADUNG ; B. LIBERT ; T. PETERS.** Advances in Cryptology-ASIACRYPT 2012. LNCS, 2012, vol. 7658, 367-385